(19) Europäisches Patentamt
European Patent Office
Office européen des brevets

(11) EP 0 684 372 B1

(12) EUROPEAN PATENT SPECIFICATION

(45) Date of publication and mention of the grant of the patent:
**28.11.2001 Bulletin 2001/48**

(21) Application number: **95902951.3**

(22) Date of filing: **14.12.1994**

(51) Int Cl.[7]: **F02D 41/06**, F02D 41/40

(86) International application number:
**PCT/JP94/02096**

(87) International publication number:
**WO 95/16855 (22.06.1995 Gazette 1995/26)**

# (54) FUEL INJECTION CONTROL METHOD FOR AN INTERNAL COMBUSTION ENGINE AND ULTRA-LOW ENGINE SPEED DETECTING DEVICE

VERFAHREN ZUM STEUERN DER KRAFTSTOFFEINSPRITZUNG FUER EINE BRENNKRAFTMASCHINE UND VORRICHTUNG ZUR ERKENNUNG SEHR LANGSAMER MOTORDREHZAHLEN

PROCEDE DE COMMANDE DE L'INJECTION DE CARBURANT D'UN MOTEUR A COMBUSTION INTERNE ET DETECTEUR DE VITESSES MOTEUR ULTRA-FAIBLES

(84) Designated Contracting States:
**DE FR GB**

(30) Priority: **15.12.1993 JP 31501593**

(43) Date of publication of application:
**29.11.1995 Bulletin 1995/48**

(73) Proprietor: **TOYOTA JIDOSHA KABUSHIKI KAISHA**
**Toyota-shi, Aichi 471-8571 (JP)**

(72) Inventors:
- **KIZAKI, Mikio**
  **Shizuoka-ken 410-11 (JP)**
- **ITO, Yoshiyasu**
  **Aichi-ken 471 (JP)**
- **KAWAI, Taiyo**
  **Nishikamo-gun Aichi-ken 470-02 (JP)**
- **SUGIYAMA, Tatsumasa**
  **Kariya-shi Aichi-ken 448 (JP)**
- **SAHASHI, Masato**
  **Shizuoka-ken 410-11 (JP)**

(74) Representative:
**Pellmann, Hans-Bernd, Dipl.-Ing. et al**
**Patentanwaltsbüro**
**Tiedtke-Bühling-Kinne & Partner**
**Bavariaring 4-6**
**80336 München (DE)**

(56) References cited:
**JP-A- 5 171 979**
**JP-A- 60 043 149**
**JP-A- 60 228 734**
**JP-A- 62 026 340**
**JP-A- 62 203 956**
**JP-A- 62 267 547**
**JP-A- 63 061 754**

- **Microfilm of the Specification and Drawings Annexed to the Written Application of Japanese Utility Model Application No. 136804/1984 (Laid-Open No. 51450/1986) (Nissan Motor Co., Ltd.) April 7, 1986 (07.04.86) (Family: none).**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 684 372 B1

## Description

TECHNICAL FIELD

The present invention relates to a fuel injection control method for an internal combustion engine and more particularly to a fuel injection control method for an internal combustion engine by which the opening and closing of an electromagnetic spill valve is controlled and an extremely low revolution speed is detected on the basis of an output signal from a revolution sensor.

BACKGROUND ART

A conventional fuel injection control apparatus may include a dynamic (so-called electromagnetic pickup type) revolution sensor which outputs a revolution signal at intervals of a predetermined crank angle occurring as the engine is rotated. This kind of revolution sensor operates on a principle that a variation in the magnetic flux in response to the rotation can be detected. This type of sensor has a disadvantage that an electromotive force of a detection coil in the sensor becomes small when the engine is rotated at a low speed. Therefore, when the engine is started in a low-temperature condition or when the battery voltage has dropped, the revolution speed thereof becomes significantly low. As a result, the revolution signal from the revolution sensor cannot be detected, causing the fuel injection control responsive to the revolution signal cannot be performed. Consequently, there is a possibility that a vehicle cannot be started.

One approach to solve this problem is proposed in JP-A-61-258951, which discloses a method whereby the electromagnetic spill valve is forced ON irrespective of the revolution signal, when the engine is started. In this fuel injection control, the aforementioned disadvantage is eliminated by performing an uninterrupted fuel injection on an engine start.

Since the above control method is configured such that the electromagnetic spill valve is kept shut on an engine start so as to utilize the maximum injection capability of a fuel injection pump. However, in most cases, this arrangement results in an excessive amount of fuel being injected.

The excessive amount of fuel invites problems including an increase in the smoke at the start of the engine, an excessively large pump driving torque, and a resultant reduction in the cranking revolution speed. In the worst case, an engine stall may occur.

JP-A-62 203 956 discloses a fuel injection control method for enhancing cold start conditions by performing a fuel injection during a time period during which the maximum crank speed is detected.

JP-A-63 61754 discloses a fuel injection control method which lowers the fuel injection amount when the number of pump angle pulses detected by a pump angle detecting means is lower than a predicted value.

DISCLOSURE OF THE INVENTION

It is an object of the present invention to provide a novel and useful fuel injection control method.

According to the invention, this object is achieved by a fuel injection control method having the features of claim 1.

Advantageous further developments are set out in the dependent claims.

According to the method of the present invention, the timing at which the electromagnetic spill valve is opened is estimated on the basis of the revolution pulses generated during a low revolution speed period at the start of the engine. Therefore, it is possible to reduce the smoke substantially as compared with the conventional control in which the fuel is injected in an uninterrupted manner.

According to the method of the present invention, preferably the likelihood of an occurrence of missing pulses is taken into account at the start of the engine, and the timing at which the spill valve is opened is updated at every input of the pulse. Accordingly, the estimated timing calculated on the basis of the pulse produced nearest the spill valve opening timing is employed. In this way, the precision with which the injection amount is controlled is improved.

According to the method of the present invention, it is possible to set the timing at which the electromagnetic spill valve is opened with a high precision. Conventionally, when the pulse is input after the missing pulses and before the valve is opened, the input pulse is mistaken for a pulse following the last pulse preceding the missing pulses (that is, for a pulse which serves as a reference for the calculation of the timing at which the electromagnetic valve is opened), and the electromagnetic spill valve is updated accordingly. In this way, there is a likelihood that the timing at which the electromagnetic spill valve is opened is substantially delayed. The present invention ensures that the update of the timing at which the electromagnetic spill valve is opened is prohibited when the missing pulses are detected by the missing pulse detection means and that the above-mentioned disadvantage of substantially delayed timing of the valve opening is prevented.

According to the method of the present invention, it is ensured that the uninterrupted injection is performed erroneously. Where the cut teeth part provided in the gear-like pulse is detected as a reference position, there is a likelihood that the revolution detection means mistakes the missing pulses as the cut teeth part. According to the method of the present invention, a determination is made as to whether the cut teeth part detection is genuine. When it is determined that the detection is not genuine, a determination of the missing pulses is given, whereupon the electromagnetic spill valve is opened at a predetermined timing. Hence, an erroneous uninterrupted fuel injection can be prevented.

According to the method of the present invention, it is possible to set the timing at which the electromagnetic spill valve is opened appropriately in an extremely low revolution speed period. It is only during the starting process that the engine revolution speed is extremely low. Two of the major causes for the extremely low revolution speed are a fatigue of the battery and an increased friction in a low temperature condition. The two causes produce a variety of revolution variation patterns. Thus, if the electromagnetic spill valve opening timing is set solely on the basis of the pulse count and the pulser interval, a wrong setting may results. The method of the present invention allows a correction responsive to the temperature to be introduced in setting the electromagnetic spill valve opening timing. Therefore, it is possible to set the electromagnetic spill valve opening timing adapted to a revolution variation pattern resulting from a great friction in the low-temperature condition. In the high-temperature condition, the electromagnetic spill valve opening timing adapted to a revolution variation pattern resulting from a fatigue of the battery can be realized. reference signal, and wherein a rotational angle is estimated from the variation in the interval between the pulses so that the electromagnetic spill valve is controlled to be opened or closed accordingly.

According to the method of the present invention, since the electromagnetic spill valve is controlled to be opened or closed by estimating an angular position from a variation in the pulse interval, it is possible to restrain the production of the smoke and to improve the exhaust emission quality as compared to an uninterrupted injection.

According to the method of the present invention, it is possible to improve the startability irrespective of the temperature. Since the starting process is completed in a short time if the temperature is high, the startability does not suffer by conducting the fuel injection control process after the detection of the first reference timing. If the temperature is low, the startability is poor. Hence, it is necessary to start the fuel injection at the earliest possible timing. Since the method of the present invention is configured such that an uninterrupted fuel injection is performed before the first reference timing, the startability is improved.

According to the method of the present invention, it is possible to calculate the revolution speed accurately even in the extremely low revolution speed period. Conventionally, the revolution speed is calculated on the basis of the count of the pulses output from the revolution detection means at every 45° CA and on the basis of the interval time. Subsequently, an average of four revolution speeds each obtained at intervals of 45° CA is calculated (that is, an average speed for 180° CA is obtained). The average revolution speed obtained is designated as the engine revolution speed. However, in the extremely low revolution speed period, there is a likelihood that missing pulses occur in the pulses generated by the revolution detection means. If the missing pulses occur, the pulse count corresponding to 45° CA and the actual crank angle may not agree with teach other or the pulse count preceding the cut teeth part may not agree with the normal count. Consequently, an accurate detection of the revolution speed may become impossible. However, the apparatus used in the present invention is configured such that at least one pulse is generated in every cycle by the pulse generating means. Moreover, the average revolution speed calculating means calculates an average revolution speed over cycles on the basis of the interval of the pulses generated by the pulse generating means and on the basis of the predetermined cycle-to-cycle crank angle. In the apparatus of the present invention, 180° CA, instead of conventional 45° CA, is used as an interval between the pulses. A pulse which does not fail to be produced in every cycle is used as a reference pulse (the reference pulse has an interval of 180° CA). According to this arrangement, even if the missing pulses occur, the missing pulses occur between pulses. Therefore, an occurrence of the missing pulses does not affect the revolution speed detection. Hence, an accurate average revolution speed over cycles can be calculated.

BRIEF DESCRIPTION OF THE DRAWINGS

Fig. 1 is a schematic diagram of a first embodiment of the present invention showing a construction of a fuel injection amount control apparatus of an diesel engine equipped with a supercharger;

Fig. 2 is an enlarged cross-sectional view of a fuel injection pump according to the first embodiment of the present invention;

Fig. 3 is a block diagram showing a construction of an ECU according to the first embodiment of the present invention;

Fig. 4 is a flowchart showing a fuel injection control process according to the first embodiment executed by the ECU;

Fig. 5 is a timing chart which explains a control principle of the first embodiment;
Fig. 6 is a diagram showing a map used in obtaining a time TSPST during which an electromagnetic spill valve is turned OFF;
Fig. 7 is a timing chart which explains a basic principle of a second embodiment;
Fig. 8 is a flowchart showing the fuel injection control process according to the second embodiment;
Fig. 9 is a timing chart which explains a basic principle of a third embodiment;
Fig. 10 is a flowchart showing the fuel injection control process according to the third embodiment;
Fig. 11 is a flowchart showing a main routine of the fuel injection control process according to the third embodiment;
Fig. 12 is a diagram showing a map used in obtaining TSPST from VRP;
Fig. 13 is a diagram showing a map used in obtaining a starting step-up correction factor from a time that elapsed since STA ON;
Fig. 14 is a timing chart which explains a basic principle of a fourth embodiment;
Fig. 15 is a flowchart showing the fuel injection control process according to the fourth embodiment;
Fig. 16 is a diagram showing a map used in the fuel injection control process according to the fourth embodiment;
Fig. 17 is a diagram showing the characteristic of the map used in the fuel injection control process according to the fourth embodiment;
Fig. 18 is a flowchart showing a variation of the fuel injection control process according to the fourth embodiment;
Fig. 19 is a diagram which explains how TSPST is calculated;
Fig. 20 is a flowchart showing the fuel injection control process according to a fifth embodiment;
Fig. 21 is a diagram showing a map used in the fuel injection control process according to the fifth embodiment;
Fig. 22 is a flowchart showing the fuel injection control process according to a sixth embodiment;
Fig. 23 is a flowchart showing the fuel injection control process according to a seventh embodiment;
Fig. 24 is a timing chart which explains a basic principle of the eighth embodiment; and
Fig. 25 is a flowchart showing a process for detecting an extremely low revolution speed according to a seventh embodiment.

## BEST MODE OF CARRYING OUT THE INVENTION

A description will now be given, with reference to the drawings, of the embodiments of the present invention.

Fig. 1 is a schematic diagram showing a construction of a fuel injection amount control apparatus, according to the embodiments, of an diesel engine equipped with a supercharger. Fig. 2 is a cross-sectional view of a distributor type injection pump 1. The fuel injection pump 1 is configured such that a drive pulley 3 is driving-linked to a crank shaft 40 of a diesel engine 2 via a belt or the like. The fuel injection pump 1 is driven as a result of the rotation of the drive pulley 3. The fuel is force-fed to each of a fuel injection nozzle 4 provided in each of cylinders of the diesel engine 2 (in this case, it is assumed that the engine 2 has four cylinders).

In the fuel injection pump 1, the drive pulley 3 is fitted to the end of a drive shaft 5. A fuel feed pump 6 (shown in a 90° turned view in Figs. 1 and 2) constituted of a vane pump is provided on the drive shaft 5.

A disc-shaped pulser 7 is fitted to the base end of the drive shaft 5. As many cut teeth parts as the cylinders of the diesel engine 2 are formed at equal intervals along the periphery of the pulser 7. In this case, four cut teeth parts are formed. Projections (teeth) are formed between the cut teeth parts at equal crank angle intervals of 3.75 degree. The base end of the drive shaft 5 is joined to a cam plate 8 via a coupling not shown.

A roller ring 9 is provided between the pulser 7 and the cam plate 8. A plurality of cam rollers 10 that face a cam face 8a of the cam plate 8 are provided along the periphery of the roller ring 9. As many cam face 8a as the cylinders of the diesel engine 2 are provided. A spring 11 urges the cam plate 8 so that the cam plate 8 is engaged with the cam roller 10.

A roller ring 9 is provided between the pulser 7 and the cam plate 8. A plurality of cam rollers 10 that face a cam face 8a of the cam plate 8 are provided along the periphery of the roller ring 9. As many cam face 8a as the cylinders of the diesel engine 2 are provided. A spring 11 urges the cam plate 8 urges the cam plate 8 so that the cam plate 8 is engaged with the cam roller 10.

The camp plate 8 is fitted to the base end of a plunger 12 for pressurizing the fuel so as to be integrally rotatable. The cam plate 8 and the plunger 22 are rotated as the drive shaft 5 rotates. That is, by the rotational force of the drive shaft 5 being transmitted to the cam plate 8 via the coupling, the cam plate 8 is engaged with the cam roller 10 while rotating. The cam plate 8 makes a reciprocating motion, the frequency of which is determined by the number of cylinders. As the cam plate 8 makes a reciprocating motion, the plunger makes a reciprocating motion in the same direction while rotating. Specifically, as the cam face 8a of the cam plate 8 is made to climb up the cam roller 10 of the roller ring 9, the plunger 12 is moved forward (lifted). Conversely, as the cam face 8a is made to climb down the cam roller 10, the plunger 12 is moved backward.

The plunger 12 is inserted into a cylinder 14 formed in a pump housing 13. A high-pressure chamber 15 is formed between the end of the plunger 12 and the bottom of the cylinder 14. As many intake grooves 16 as the cylinders of the diesel engine 2 are formed around the periphery of the end of the plunger 12, and as many distributor ports 17 as the cylinders of the diesel engine 2 are formed around the periphery of the plunger 12 near its end. An intake port 19 and a distributor passage 18 are formed in the pump housing 13 in correspondence to the intake grooves 16 and the distributor ports 17, respectively.

When the drive shaft 5 is rotated so as to drive the fuel feed pump 6, the fuel is supplied from a fuel tank not shown to a fuel chamber 21 via a fuel supply port 20. During a suction stroke in which the plunger 12 is drawn backward so as to reduce the pressure in the high-pressure chamber 15, the fuel is introduced from the fuel chamber 21 to the high-pressure chamber 15 by one of the intake grooves 16 communicating with the intake port 19. During a compression stroke in which the plunger 12 is urged forward so as to increase the pressure in the high-pressure chamber 15, the fuel is force-fed from the distributor passage 18 to the fuel injection nozzle 4 provided in each of the cylinders, whereupon the injection takes place.

The pump housing 13 is provided with a spill passage 22 for spilling the fuel by allowing the high-pressure chamber 15 to communicate with the fuel chamber 21. An electromagnetic spill valve 23 which serves as a valve for adjusting the spill of the fuel from the high-pressure chamber 15 is provided in the spill passage 22. The electromagnetic spill valve 23 is a normally opened valve. When a coil 24 is not energized (i.e. in an OFF state), a valve body 25 is open so that the fuel in the high-pressure chamber 15 is spilled to the fuel chamber 21. When the coil 24 is energized (i.e. in an ON state), the valve body 25 is closed so that the fuel is prevented from spilling from the high-pressure chamber 15 to the fuel chamber 21.

The valve 23 is opened or closed responsive to the control of time at which the coil 24 of the electromagnetic spill valve 23 is energized. In this way, the amount of the fuel spilled from the high-pressure chamber 15 to the fuel chamber 21 is adjusted. By opening the electromagnetic spill valve 23 during a compression stroke of the plunger 12, the pressure of the fuel in the high-pressure chamber 15 is reduced, and the fuel injection from the fuel injection nozzle 4 is halted. That is, the fuel pressure in the high-pressure chamber 15 cannot be increased by urging the plunger 12 forward as long as the electromagnetic spill valve 23 is open. Hence, the fuel injection from the fuel injection nozzle 4 does not take place. The amount of the fuel injected from the fuel injection nozzle 4 is controlled by controlling the timings at which the electromagnetic spill valve 23 is opened or closed during the forward movement of the plunger 12.

A timer unit 26 (shown in a 90° turned view in Figs. 1 and 2) for adjusting the timing of the fuel injection is provided below the pump housing 13. The timer unit 26 modifies the position of the roller ring 9 in the rotational direction of the drive shaft 5 so as to modify the timings at which the cam face 8a is engaged with the cam roller 10, that is, the timing of the reciprocating motion the cam plate 8 and the plunger 12.

The timer unit 26 is hydraulically driven and comprises a timer housing 27, a timer piston 28 fitted in the housing 27, and a timer spring 31 which, provided in a low-pressure chamber 29 of the timer housing 27, urges the timer piston 28 toward a pressurized chamber 30. The timer piston 28 is connected to the roller ring 9 via a slide pin 32.

The fuel, which is pressurized by the fuel feed pump 6, is introduced into the pressurized chamber 30 of the timer housing 27. The position of the timer piston 28 is determined according to the fuel pressure and the urging force of the timer spring 31. As the position of the timer spring 28 is determined, the position of the roller ring 9 is determined, and the timing of the reciprocal motion of the cam plate 8 and the plunger 12 is determined.

A timing control valve 33 for adjusting the fuel pressure (that is, a control oil pressure) of the timer unit 26 is provided in the timer unit 26. That is, the pressurized chamber 30 and the low-pressure chamber 29 of the timer housing 27 are allowed to communicate with each other via a communicating passage 34. The timing control valve 33 is provided in the communicating passage 34. The timing control valve 33 is an electromagnetic valve which is opened or closed in accordance with an energizing signal subject to duty control. Opening and closing of the timing control valve 33 adjusts the fuel pressure in the pressurized chamber 30. By adjusting the fuel pressure, the timing of the fuel injection from the fuel injection nozzle 4 as well as the lift timing of the plunger 12 is controlled.

A revolution sensor 35 constituted of an electromagnetic pickup is provided as an engine revolution detection means above the roller ring 9 so as to face the periphery of the pulser 7. The revolution sensor 35 detects a variation in the magnetic flux as the projections in the pulser 7 traverses a space below the revolution sensor 35. The revolution sensor 35 outputs a timing signal, that is, engine revolution pulses, corresponding to an engine revolution speed NE. In other words, the revolution sensor 35 outputs a revolution-angle signal for each predetermined crank angle. Since the revolution sensor 35 is integral with the roller ring 9, the revolution sensor 35 outputs a reference timing signal at regular timings with respect to the lift of the plunger 12, irrespective of the control operation of the timer unit 26. As has been described earlier, since the revolution sensor 35 uses an electromagnetic pickup, the electromotive force generated in the pickup in the sensor becomes small during a low revolution speed period, with the result that the engine revolution pulses cannot be output.

A description will now be given of the diesel engine 2. A main combustion chamber 44 corresponding to each of the cylinders of the diesel engine 2 comprises a cylinder 41, a piston 42 and a cylinder head 43. The main combustion chamber 44 is connected to a subsidiary combustion chamber 45 provided in correspondence to each of the cylinders.

The fuel injected from the respective fuel injection nozzle 4 is supplied to the subsidiary combustion chamber 45. The subsidiary combustion chamber 45 is provided with a known glow plug 46 as a subsidiary starting device.

The diesel engine 2 is provided with an intake pipe 47 and an exhaust pipe 50. The intake pipe 47 is provided with a compressor 49 of a turbocharger 48 constituting a supercharger. The exhaust pipe 50 is provided with a turbine 51 of the turbocharger 48. The exhaust pipe 50 is also provided with a waster gate valve 52 for adjusting a boost pressure PIM.

As is know, the turbocharger 48 is configured such that the energy of the exhaust gas is utilized to rotate the turbine 51 and the compressor 49 coupled to the same shaft as the turbine 51 so as to boost the pressure of the intake air. Thus, a fuel-air mixture having a high density is fed to the main combustion chamber 44 so that a large amount of fuel is combusted and the diesel engine 2 provides a large output.

The diesel engine 2 is provided with a reflex pipe 54 for returning a portion of the exhaust gas in the exhaust pipe 50 to an intake port 53 of the intake pipe 47. An exhaust gas recirculation valve (EGR valve) 55 for adjusting a reflux amount is provided in the reflux pipe 54. The EGR valve 55 is controlled by a vacuum switching valve (VSV) 58 so as to be opened or closed.

A throttle valve 58 which is opened and closed in cooperation with actuation of an accelerator pedal 57 is provided in the intake pipe 47. A bypass 59 is provided to be parallel with the throttle valve 58, and a bypass throttle valve 60 is provided in the bypass 59.

The bypass throttle valve 60 is controlled so as to be opened or closed by an actuator 63 having divided diaphragm chambers driven under the control of two VSVs 61 and 62. The bypass throttle valve 60 is opened or closed responsive to the running state of the diesel engine 2. For example, when the diesel engine 2 is in an idle running state, the bypass throttle valve 60 is half open in order to reduce unwanted noise and oscillation. When the diesel engine 2 is in a normal running state, the bypass throttle valve 60 is open to the full. When the operation of the diesel engine 2 is stopped, the bypass throttle valve 60 is closed so that a vehicle can come to a halt smoothly.

The fuel injection pump 1, the electromagnetic spill valve 23 provided in the diesel engine 2, the timing control valve 33, the glow plug 46 and the VSVs 56, 61 and 62 are electrically connected to an electronic control unit (hereinafter, referred to as ECU) 71. The ECU 71 controls the timing at which these components are driven.

In addition to the revolution sensor 35, various sensors such as the following are provided so as to detect the running state of the diesel engine 2. An inlet air temperature sensor 72 for detecting an inlet air temperature THA in the vicinity of an air cleaner 64 is provided in the intake pipe 47. An accelerator opening sensor 73 for detecting an accelerator opening ACCP corresponding to a load of the diesel engine 2 is provided at the throttle valve 58. In the vicinity of the intake port 53, an intake pressure sensor 74 for detecting the boost pressure PIM is provided, the boost pressure PIM being a pressure of the intake air supercharged by the turbocharger 48.

Further, a water temperature sensor 75 for detecting the temperature THW of a cooling-water of the diesel engine 2, and an ignition switch 78 which is operated when the diesel engine is started or stopped are provided. A crank angle sensor 76 for detecting a rotational reference position of a crank shaft 40 of the diesel engine 2 is provided. For example, the crank angle sensor 78 detects the rotational position of the crank shaft 40 with respect to a top dead center of a specific cylinder. Further, there is provided a vehicle speed sensor 77 for detecting a vehicle speed SP by turning a lead switch 77b ON or OFF using a magnet 77a rotated by a gear of a transmission not shown.

The sensors 72 - 77 are electrically connected to the ECU 71. The revolution sensor 35 is also electrically connected to the ECU 71. The ECU 71 controls the electromagnetic spill valve 23, the timing control valve 33, the glow plug 46 and the VSVs 56, 61 and 62 in accordance with a signal output from the sensors 35, 72 - 77.

A description will now be given, with reference to the block diagram of Fig. 3, of a construction of the ECU 71. The ECU 71, as a logic circuit, comprises: a central processing unit (CPU) 81; a read only memory (ROM) 82 which stores a predetermined control program or a map; a random access memory (RAM) 83 which temporarily stores operation results of the CPU; a backup RAM 84 which stores predetermined data; a clock 92 which generates a predetermined clock signal; and a bus 87 which connects the CPU 81, the ROM 82, the RAM 83, the RAM 84 and the clock 92 to an input port 85 and an output port 86.

The intake air temperature sensor 72, the accelerator opening sensor 73, the intake pressure sensor 74 and the water temperature sensor 75 are connected to the input port 85 via respective buffers 88, 89, 90, 91, a multiplexer 93 and an A/D converter 94. Likewise, the revolution sensor 35, the crank angle sensor 76 and the vehicle speed sensor 77 are connected to the input port 85 via a waveform shaping circuit 95. The ignition switch 78 is also connected to the input port 85.

The CPU 81 reads detection signals from the sensors 35, 72 - 77 via the input port 85. The electromagnetic spill valve 23, the timing control valve 33, the glow plug 46 and the VSVs 56, 61 and 62 are connected to the output port 86 via drive circuits 96, 97, 98, 99, 100 and 101, respectively.

The CPU 81 controls the electromagnetic spill valve 23, the timing control valve 33, the glow plug 46 and the VSVs 56, 61 and 62 in accordance with input values read from the sensors 35, 72 - 77.

[FIRST EMBODIMENT]

A description will now be given, with reference to Figs. 4 and 5, of a fuel injection control process according to a first embodiment executed by the ECU 71. The flowchart shown in Fig. 4 shows a fuel injection control process according to the first embodiment executed by the ECU 71. Fig. 5 is a timing chart showing an engine revolution speed, engine revolution pulses, a drive signal for driving the electromagnetic spill valve (indicated as SPV in the figure) and a cam diagram indicating occurrences of the lift of the pump cam. This embodiment corresponds to claims 1 and 2.

A description will now be given, with reference to Fig. 5, of a basic principle. As described earlier, the engine revolution speed is low when the engine is started (for example, below 150 rpm). It is to be noted that a variation in revolution as shown in Fig. 5(A) occurs, a lowest revolution speed occurring at a TDC (top dead center). The revolution speed $NE_{LIM}$ indicated by a dashed line in Fig. 5(A) signifies a limit of the engine revolution detection capability of the revolution sensor 35. This embodiment is best applied to a case in which the detection limit revolution speed $NE_{LIM}$ is relatively high because of the characteristic etc. of the revolution sensor 35.

As shown in Fig. 5(B), when the engine revolution speed is higher than the detection limit revolution speed $NE_{LIM}$, the revolution sensor 35 is able to output the engine revolution pulses. When the engine revolution speed is lower than the detection limit revolution speed $NE_{LIM}$, the revolution sensor 35 is not capable of outputting the engine revolution pulses.

In this embodiment, the electromagnetic spill valve 23 is controlled to be opened or closed in accordance with the engine revolution pulses output from the revolution sensor 35 in a period in which the engine revolution speed is higher than the detection limit revolution speed $NE_{LIM}$ (hereinafter, a period in which the engine revolution speed is higher than the detection limit revolution speed $NE_{LIM}$ will be referred to as a high-speed period).

Specifically, the engine revolution pulses output by the revolution sensor 35 is counted (hereinafter, the count yielded by this counting operation will be referred to as an NE interrupt count CNIRQ). Concurrently, the pulse interval of the engine revolution pulses is calculated (hereinafter, the pulse interval obtained in this calculating operation will be referred to as an NE pulse interval TNINT). The electromagnetic spill valve 23 is controlled to be opened or closed in accordance with the NE interrupt count CNIRQ and the NE pulse interval TNINT.

The opening and closing of the electromagnetic spill valve 23 is performed in the following manner. The timing at which the electromagnetic spill valve 23 is to be ON (closed) is set to be a timing at which the engine revolution pulses are output from the revolution sensor 35. This arrangement comes from a fact that the engine revolution speed increases during the suction stroke in an engine cycle. Since the timing at which the engine revolution pulses are output in a high-speed period of the engine revolution substantially agrees with the timing at which the electromagnetic spill valve 23 is closed, this embodiment is configured such that the electromagnetic spill valve 23 is turned ON (closed) when the engine revolution pulses are output from the revolution sensor 35.

The timing at which the electromagnetic spill valve 23 is turned OFF (opened) is determined as follows. In response to the output of the engine revolution pulses from the revolution sensor 35, the NE interrupt count CNIRQ and the NE pulse interval TNINT are determined.

Once the NE interrupt count CNIRQ and the NE pulse interval TNINT are determined, the ECU 71 calculates a timing at which the electromagnetic spill valve 23 is turned OFF (opened) on the basis of the NE interrupt count CNIRQ and the NE pulse interval TNINT.

As has been described previously, the detection limit revolution speed $NE_{LIM}$ of the revolution sensor 35 is relatively high in this embodiment, a range of one to three engine revolution pulses may be output from the revolution sensor 35 in the high-speed period of the engine revolution, as shown in Fig. 5(B).

In this embodiment, a duration of time during which the electromagnetic spill valve 23 is turned OFF (opened) is made to start at a last pulse of the engine revolution pulses output in one high-speed period (hereinafter, this duration of time will be referred to as an electromagnetic spill valve OFF time TSPST).

The electromagnetic spill valve OFF time TSPST is determined on the basis of a map shown in Fig. 6. The map shown in the figure is a two-dimensional map, the NE pulse interval TNINT being plotted in the x-axis, CNIRQ being a parameter, and the electromagnetic spill valve OFF time TSPST being plotted in the y-axis.

A description will now be given of how the electromagnetic spill valve OFF time TSPST is obtained in accordance with the map shown in Fig. 6.

As described previously, the electromagnetic spill valve OFF time TSPST is defined to start at a last pulse (indicated by arrows A in Fig. 5(B)) of the engine revolution pulses output in the high-speed period. Therefore, the electromagnetic spill valve OFF time TSPST varies depending on the number of engine revolution pulses generated (output) in one high-speed period.

To use the example shown in Fig. 5, two engine revolution pulses are generated in a first high-speed period (indicated by H1), and three engine revolution pulses are generated in a second high-speed period (indicated by H2) and in a third high-speed period (indicated by H3). Therefore, the electromagnetic spill valve OFF time TSPST for the first high-speed period is longer in duration than the electromagnetic spill valve OFF time TSPST for the second and third high-speed periods.

The number of engine revolution pulses generated in one high-speed period is determined according to the NE interrupt count CNIRQ. Thus, the map shown in Fig. 6 is so configured that the electromagnetic spill valve OFF time TSPST for different values of the NE interrupt count CNIRQ is obtained.

The background behind the configuration of the two-dimensional map of Fig.6, wherein the electromagnetic spill valve OFF time TSPST is determined according to the NE pulse interval TNINT, is that the revolution speed occurring when the engine revolution drops to a low-speed period and when the engine revolution pulses fail to be output from the revolution sensor 35 can be estimated according to the NE pulse interval TNINT of the engine revolution pulses output in the high-speed period so that the electromagnetic spill valve OFF time TSPST is determined.

The reason why the electromagnetic spill valve OFF time TSPST can be determined on the basis of the NE pulse interval TNINT will be given below. It is first to be noted that the engine revolution speed drops near the TDC to such an extent that the engine revolution pulses are not output, as described before.

The present inventors experimented with detection of the engine revolution pulses in a range (low-speed period) in which the revolution sensor 35 using an electromagnetic pickup fails to detect the pulses, using an element having a higher precision than the electromagnetic pickup, such as an MR element. We found that, in the low-speed period, too, the NE pulse interval TNINT becomes longer as the engine revolution speed drops. The rate by which the NE pulse interval TNINT becomes lower is regular and can be estimated on the basis of the NE pulse interval TNINT in the high-speed period.

Thus, it is concluded that the obtaining of the NE pulse interval TNINT is possible even in the range (low-speed period) in which the sensor fails to detect the pulses, if the NE pulse interval TNINT of the engine revolution pulses output in the high-speed period is used as a basis. Hence, it is possible to estimate the electromagnetic spill valve OFF time TSPST on the basis of the NE pulse interval TNINT of the engine revolution pulses output in the high-speed period.

This embodiment is based on the above-described background and configured such that the electromagnetic spill valve OFF time TSPST is estimated on the basis of the NE pulse interval TNINT of the engine revolution pulses output in the high-speed period. Specifically, the estimated values are stored in the ECU 71 as a map shown in Fig. 6.

According to the construction of this embodiment, estimation of the electromagnetic spill valve OFF time TSPST is enabled even when the engine revolution pulses are not output. With this, it is possible to properly set a time at which the electromagnetic spill valve 23 is opened. This constitution has advantages over the conventional constitution in which the electromagnetic spill valve is kept ON (closed) on an engine start in that the fuel injection amount is reduced, the smoke is reduced, and the cranking torque is prevented from being reduced.

A description will now be given, with reference to Fig. 4, of the fuel injection amount control process executed by the ECU 71. The fuel injection amount control process shown in Fig. 4 is an NE interrupt routine activated when the engine revolution pulses are input to the ECU 71.

When the fuel injection amount control process shown in Fig. 4 is activated, the ECU 71 calculates the NE pulse interval TNINT on the basis of the input engine revolution pulses in step 101 and increments the NE interrupt count CNIRQ.

In step 102, the ECU 71 makes a determination as to whether or not an activation signal output from the ignition switch 78 has arrived. When the ECU 71 determines that the ignition switch 78 is ON (STA ON), the process proceeds to step 103. In step 103, the ECU 71 makes a determination as to whether or not the engine revolution speed is lower than 150 rpm.

As described earlier, the engine revolution pulses may not be input at the start of the engine, making it impossible to determine the engine revolution speed. This embodiment is configured such that the engine revolution speed = 0 when the it is impossible to determine the engine revolution speed.

Therefore, a positive answer is yielded in step 103 if, at the start of the engine, there is a variation in the engine revolution so that the determination of the engine revolution speed is made intermittently. Thereupon, the process proceeds to step 104.

In step 104, a determination is made as to whether or not the cut teeth parts formed in the pulser 7 are properly detected by the revolution sensor 35, in other words, whether or not the NE interrupt count CNIRQ is appropriate.

Steps 102 - 104 function as means for detecting a starting condition of the engine. When positive answers are yielded in steps 102 and 103 and a negative answer is yielded in step 104, the fuel injection process of step 105 and beyond is carried out. When negative answers are yielded in steps 102 and 103 or when a positive answer is yielded in step 104, the condition of the engine is not a starting condition. Therefore, it is determined that the engine revolution pulses are input to the ECU 71 in a normal manner, and the detection of the cut teeth parts is carried out normally. The process then proceeds to step 109, whereupon a normal process is executed, that is, the fuel injection control is performed on the basis of the engine revolution pulses.

In step 105, a determination is made as to whether or not the electromagnetic spill valve 23 is currently OFF (open). If it is determined in step 105 that the electromagnetic spill valve is currently OFF (open), the process proceeds to step 106, whereupon the electromagnetic spill valve 23 is turned ON (closed). In response to this closing, the fuel is supplied from the fuel pump 1 to the diesel engine 2.

As a result of the processes in steps 105 and 106, the electromagnetic spill valve 23 is closed at a time when engine revolution pulse indicated by CNIRQ = 0 as shown in Fig. 5(B) is input to the ECU 71. The electromagnetic spill valve 23 is thus turned ON (closed) in response to a first engine revolution pulse input in the high-speed period because the increase of the engine revolution speed coincides with the suction stroke of the engine cycle, wherein the fuel is introduced by the fuel injection pump 1 into the high-pressure chamber 15.

Subsequently, in step 107, the electromagnetic spill valve OFF time TSPST, which is a time during which the electromagnetic spill valve 23 (SPV) is turned OFF, is calculated on the basis of the NE interrupt count CNIRQ and the NE pulse interval TNINT obtained in step 101. As described earlier, the calculation of the electromagnetic spill valve OFF time TSPST is performed in accordance with the map shown in Fig. 6. The map shown in Fig. 6 is stored in the ROM 82 of the ECU 71.

After the electromagnetic spill valve OFF time TSPST is calculated in step 107, the process proceeds to step 108, whereupon the ECU 71 adds the electromagnetic spill valve OFF time TSPST to the current time and sets the sum in an output compare register (not shown).

Subsequently, in step 110, the electromagnetic spill valve drive control process is executed. If it is determined that the last engine revolution pulse in the current high-speed period (indicated by arrows A shown in Fig. 5(B)) is input, the ECU 71 turns OFF (opens) the electromagnetic spill valve 23 after determining that the electromagnetic spill valve OFF time TSPST stored in the output compare register has elapsed since the input of the last engine revolution pulse.

The above-described series of processes has advantages over the conventional construction wherein the electromagnetic spill valve is kept turned ON (closed) at the start of the engine in that an intermittent fuel injection in accordance with the engine condition of the diesel engine 2 is enabled, the amount of the fuel injected is reduced, the smoke is reduced and reduction in the cranking torque is prevented.

Since the process shown in Fig. 4 is executed as an NE interrupt, the electromagnetic spill valve OFF time TSPST is calculated and updated every time the engine revolution pulses are input to the ECU 71.

[SECOND EMBODIMENT]

A description will now be given, with reference to Figs. 7 and 8, of a second embodiment of the fuel injection amount control process executed by the ECU 71. Fig. 7 is a timing chart which explains a basic principle of this embodiment, and the flowchart of Fig. 8 shows the fuel injection control process according to the second embodiment executed by the ECU 71. This embodiment corresponds to claim 3 provided later.

First, a description will be given, with reference to Fig. 7, of the basic principle of this embodiment.

The first embodiment described above deals with a case in which the detection limit revolution speed $NE_{LIM}$ is relatively high for reasons including the characteristic of the revolution sensor 35, and the number of the engine revolution pulses detected is relatively small (1 - 3 pulses). This embodiment, however, deals with a case in which the number of engine revolution pulses output by the revolution sensor 35 is relatively large and there are 2 - 3 missing teeth, that is, 2 - 3 pulses are missing.

Fig. 7(A) shows a case in which pulses corresponding to ninth and tenth NE interrupt counts CNIRQ are undetected because the engine revolution drops to the low-speed period (pulses that are not detected are indicated by broken lines in Fig. 7).

In the construction of the first embodiment, the electromagnetic spill valve OFF time TSPST, during which time the electromagnetic spill valve 23 should be closed, is defined to start at a last engine revolution pulse output in a first high-speed period.

To use the example shown in Fig. 7(A), the last engine revolution pulse output in the first high-speed period is the pulse corresponding to CNIRQ = 8. According to the first embodiment, the electromagnetic spill valve OFF time TSPST 8 is defined to start at this pulse.

However, as a lowest engine revolution speed near the TDC approaches the detection limit revolution speed $NE_{LIM}$, there may be a case in which the pulse corresponding to CNIRQ = 9 fails to be detected (this phenomenon in which a pulse goes undetected is called a missing pulse) but the pulse corresponding to CNIRQ = 10 is detected, as shown in Fig. 7(B).

Since the construction of the first embodiment does not include missing pulse detection means for detecting missing pulses, the ECU 71 erroneously recognizes the pulse corresponding to CNIRQ = 10 as the ninth pulse input to the ECU 71.

That is, the pulse which actually corresponds to CNIRQ = 10 is mistaken for the pulse corresponding to CNIRQ = 9 (the value of the NE interrupt count CNIRQ that the ECU 71 erroneously determines is shown in brackets in Fig. 7(B)).

To use the example shown in Fig. 7(B), upon the arrival of the pulse corresponding to CNIRQ = 10, the ECU 71 determines the electromagnetic spill valve OFF time TSPST 9 corresponding to CNIRQ = 9 on the basis of the map shown in Fig. 6. That is, the electromagnetic spill valve OFF time TSPST 9 set by the ECU 71 starts at CNIRQ = 10.

Since a proper fuel injection control requires that TSPST which starts at CNIRQ = 10 should be the electromagnetic spill valve OFF time TSPST 10 corresponding to CNIRQ = 10, the setting of the electromagnetic spill valve OFF time TSPST 9 corresponding to CNIRQ = 9 to start at a timing CNIRQ = 10 as described above causes the time at which the fuel injection stops to come later than the normal fuel injection stop timing. Referring to Fig. 7, the duration of the fuel injection is extended by $T_{DELAY}$. This extension causes the fuel injection amount to increase. The deviation of an end the fuel injection from a normal fuel injection stop timing induces the smoke and an unfavorable exhaust emission.

This embodiment has an objective of preventing the duration of the fuel injection from being extended beyond the normal fuel injection time, preventing the smoke from being produced and improving the exhaust emission, by detecting missing pulses and by preventing the electromagnetic spill valve OFF time TSPST from being calculated when any missing pulse is detected.

A description will now be given, with reference to the flowchart shown in Fig. 8, of the fuel injection control process according to the second embodiment executed by the ECU 71.

The fuel injection control process shown in Fig. 8 is also executed as an NE interrupt process. In step 200, the ECU 71 makes a determination as to whether or not the current engine condition is in an extremely low revolution speed period. In this embodiment, a determination that the engine condition is in an extremely low revolution speed period is given when the engine revolution speed (NE) is below 120 rpm. When it is determined in step 200 that the current engine condition is not in the extremely low revolution speed period, the process ends without proceeding to step 202 or beyond because it is not likely that missing pulses occur.

When it is determined in step 200 that the current engine condition is in the extremely low revolution speed period, the process proceeds to step 202, whereupon a determination is made as to whether or not the cut teeth parts formed in the pulser 7 are normally detected by the revolution sensor 35, that is, whether or the NE interrupt count CNIRQ has a correct value.

When a negative answer is yielded in step 200, that is, when the NE interrupt count CNIRQ does not have a correct value, the process ends without step 204 or beyond being executed because an accurate fuel injection control cannot be performed.

When it is determined in step 202 that the NE interrupt count CNIRQ has a correct value, the process proceeds to step 204, whereupon a determination is made as to whether or not a TSP update prohibition flag is ON. For the sake of convenience, a description regarding the TSP prohibition flag and the process in step 202 will be described later.

In step 206, the current NE interrupt pulse interval TNINT is calculated, and a determination is made as to whether or not the calculated NE pulse interval TNINT is longer in duration than a value obtained by multiplying a predetermined expected pulse interval TNEINT by a constant C (hereinafter, this result of multiplication as well as TNEINT will be generically referred to as an expected pulse interval). The expected pulse interval TNEINT is a maximum value of the NE pulse interval TNINT expected to exist when there are no missing teeth, and the constant C is a correction value determined on the basis of the characteristic of the fuel injection pump 1 etc.

When the calculated NE pulse interval TNINT is longer in duration than the expected pulse interval, the ECU 71 determines that missing teeth occurs.

To use the example shown in Fig. 7(A), when the missing teeth corresponding to CNIRQ = 9, 10 exist, the NE pulse interval calculated when the pulse corresponding to CNIRQ = 10 is input to the ECU 71 is equal to TNINT (MISS) as shown in Fig. 7(A). TNINT (MISS) is longer than a normal TNINT calculated when the missing teeth corresponding to CNIRQ = 9, 10 exist.

Thus, in step 206, a determination that there are missing teeth is given on the basis of the duration of the current calculated NE pulse interval. When the current calculated NE pulse interval TNINT is longer than the expected pulse interval, it is determined that there are missing teeth. When shorter, it is determined that there are no missing teeth.

As described previously, if there are missing teeth, it is likely that the fuel injection time becomes longer, the smoke is produced and the exhaust emission becomes unfavorable. For this reason, when a positive answer is yielded in step 206, in other words, when it is determined that there are missing teeth, the process proceeds to step 212, whereupon the TSP update prohibition flag is set.

When TSP update prohibition flag is set, it means that there are missing teeth and it is likely that the smoke is produced and the exhaust emission becomes unfavorable.

When the fuel injection control process shown in Fig. 8 is executed at a next NE interrupt, a positive answer is yielded in step 204 because the TSP update prohibition flag is set during the current fuel injection control process. The fuel injection control process is configured to stop immediately when a positive answer is yielded in step 204. Hence, execution of the process in step 208, described later, for calculating the electromagnetic spill valve OFF time TSPST is prohibited.

When a positive answer is yielded in step 206, that is, when it is determined that there are no missing teeth, the process proceeds to step 208, whereupon the electromagnetic spill valve OFF time TSPST is calculated on the basis of the NE interrupt count CNIRQ and the NE pulse interval TNINT as in the case of the first embodiment. Subsequently, in step 210, an expected pulse interval TNEINT for use in step 206 of the next NE interrupt process is calculated. The expected pulse interval TNEINT is determined by referring to a two-dimensional map (not shown) having the current NE pulse interval TNINT and the NE interrupt count CNIRQ as parameters.

As described above, this embodiment ensures that the update of the timing at which the electromagnetic spill valve 23 is opened is prohibited when an occurrence of missing pulses is detected in the process executed in step 206. In this way, a disadvantage of a significant delay in the valve opening timing is prevented.

[THIRD EMBODIMENT]

A description will now be given, with reference to Figs. 9 and 10, of the fuel injection amount control process according to a third embodiment executed by the ECU 71. Fig. 9 is a timing chart which explains a basic principle of this embodiment. The flowchart of Fig. 10 shows the fuel injection control process according to the third embodiment executed by the ECU 71. This embodiment corresponds to claim 4.

A description will be given, with reference to Fig. 9, of the basic principle of this embodiment.

As has been described, cut teeth parts are formed in the pulser 7, and the counting of the NE interrupt count CNIRQ is started using the timing at which a cut teeth part is detected as a reference timing (starting point). Therefore, if the cut teeth part position (that is, the reference timing) fails to be detected properly, it becomes impossible to perform the fuel injection control with precision.

As has been described before, if the engine revolution speed drops below the detection limit revolution speed $NE_{LIM}$ as a result of a variation in the engine revolution speed occurring when the engine revolution speed is extremely low, the revolution sensor 35 can no longer produce pulses, thus creating missing teeth. In the example shown in Fig. 9, a failure to detect pulses occurs near TDC. Specifically, the pulses corresponding to the NE interrupt counts CNIRQ = 8 - 10 are not detected so that missing teeth (indicated by broken lines) exist.

A determination by the ECU 71 that the cut teen part is detected is given when a predetermined number of engine revolution pulses are not detected. For this reason, there is a likelihood that the ECU 71 mistakes missing pulses for the cut teeth part.

In the fuel injection amount control process of the foregoing embodiments, there is not provided means for determining whether a failure to detect a predetermined number of engine revolution pulses derives from the cut teeth part or missing teeth. It is to be noted that the fuel injection is set to start at a timing (the timing at which the electromagnetic spill valve 23 is closed) at which the cut teeth part is detected.

Accordingly, mistaking the missing teeth for the cut teeth part may lead to the electromagnetic spill valve 23 being closed and the fuel injection is started near TDC where missing teeth are likely to occur. Since the fuel injection is normally stopped near TDC, if the fuel injection is started near TDC as a result of a false detection of the cut teeth part, a condition wherein the fuel continues to be injected substantially uninterrupted (as opposed to intermittently) during the starting process is produced. This condition is equal to a condition produced by the conventional fuel control wherein the fuel is injected regardless of the timing. This condition causes a large volume of smoke or an unfavorable exhaust emission.

This embodiment is configured such that a determination is made as to whether or not a detection by the ECU 71 of the cut teeth part in an extremely low revolution speed period is a genuine detection. When the detection of the cut teeth part proves genuine, the electromagnetic spill valve 23 is closed, and the electromagnetic spill valve 23 is opened at a timing calculated on the basis of the engine condition. When the detection of the cut teeth part proves false, the electromagnetic spill valve 23 is forced to be opened at a predetermined timing following the false detection of the cut teeth part.

According to the method outlined above, in response to the determination that the detection of the cut teeth part is false and missing pulses occur, the electromagnetic spill valve is opened at the predetermined timing. Thus, an uninterrupted fuel injection is positively prevented.

A description will now be given, with reference to a flowchart of Fig. 10, of the fuel injection control process according to the third embodiment executed by the ECU 71.

The fuel injection control process shown in Fig. 10 is also executed as an NE interrupt process. In step 300, the ECU 71 calculates the NE pulse interval TNINT on the basis of the input engine revolution pulses and increments the NE interrupt count CNIRQ.

Subsequently, in step 302, the ECU 71 makes a determination as to whether or not a start signal output by the ignition switch 78 is input to the ECU 71. When it is determined that the ignition switch 78 is turned ON (STA ON), the process proceeds to step 304. In step 304, a determination is made as to whether or not the engine revolution speed is below 150 rpm, that is, whether or not the speed is extremely low.

If it is determined in step 304 that the engine revolution speed is extremely low, the process proceeds to step 306. In step 306, a determination regarding the detection of the cut teeth part is conducted such that a difference between the NE pulse interval $TNINT_{n-1}$ calculated in the previous NE interrupt and the NE pulse interval $TNINT_n$ calculated in step 300 in the current NE interrupt is obtained, and a determination that the cut teeth part is detected is given when the difference is greater than a predetermined value.

That is, the cut teeth part detection process of step 304 does not alone provides a determination whether the detection of the cut teeth part is a genuine detection or the detection derives from the missing teeth phenomenon, as has been described.

If positive answers are yielded in steps 302 - 306, the ECU 71 conducts the starting fuel injection process of steps 308 - 312.

In step 308, a cut teeth part determination process for determining whether or not the cut teeth part detection of step 306 is a genuine detection or one that derives from the missing teeth phenomenon. A description will now be given of the principle behind the cut teeth part determination process performed in step 308.

As shown in Fig. 9, the cut teeth part detection normally occurs when the engine revolution speed is high. On the other hand, the missing teeth occur near TDC where the engine revolution speed is low. When the engine revolution speed is high, the NE pulse interval TNINT, that is, the interval between the engine revolution pulses, is short. When the engine revolution speed is low, the NE pulse interval TNINT becomes long.

Accordingly, it is possible to determine, when the step 306 yields a cut teeth part detection, whether the cut teeth part detection is a genuine detection or one that derives from the missing teeth phenomenon by checking the duration of the NE pulse interval $TNINT_{n-1}$ (hereinafter, referred to as a previous NE pulse interval $TNINT_{n-1}$) calculated in the previous NE interrupt.

A more specific description will now be given by referring to Fig. 9. In the example shown in Fig. 9, the ECU 71 arrives at a determination that the cut teeth part is detected at timings indicated by arrows A - D in Fig. 9(B). While the cut teeth part detections in the timings indicated by the arrows B and D are normal detection of the cut teeth part, the detections at the timings indicated by the arrows A and C are not normal detection but the ones derive from the missing teeth phenomenon.

Thus, in order to determine whether or not a detection of the cut teeth part is normal, the previous NE pulse intervals $(TNINT_{n-1})_A$ - $(TNINT_{n-1})_D$ are stored, and when the cut teeth part detection is provided, a determination is made as to whether or not each of the previous NE pulse intervals $(TNINT_{n-1})_A$ - $(TNINT_{n-1})_D$ is longer in duration than a reference value $T_{FIX}$.

The reference value $T_{FIX}$ is determined on the basis of the previous NE pulse interval $TNINT_{n-1}$ obtained experimentally when the cut teeth part detection is a genuine detection. Specifically, the reference value $T_{FIX}$ is a maximum value of the previous NE pulse interval $TNINT_{n-1}$. Accordingly, when the previous NE pulse interval $(TNINT_{n-1})_A$ - $(TNINT_{n-1})_D$ is longer in duration the reference value $T_{FIX}$, it can be determined that the detection of the cut teeth part is false. Conversely, when the previous NE pulse interval $(TNINT_{n-1})_A$ - $(TNINT_{n-1})_D$ is shorter in duration than the reference value $T_{FIX}$, it is determined that the detection of the cut teeth part is genuine.

On the basis of the principle described above, a determination is made as to whether or not the previous NE pulse interval $TNINT_{n-1}$ is shorter in duration than the reference value $T_{FIX}$ in step 308. When it is determined that the previous NE pulse interval $TNINT_{n-1}$ is shorter in duration than the reference value $T_{FIX}$, it is determined that the cut teeth part detection in step 306 is a normal detection of the cut teeth part. In step 310, the electromagnetic spill valve 23 is closed. Thus, the fuel injection is started.

If it is determined in step 308 that the previous NE pulse interval $TNINT_{n-1}$ is longer in duration than the reference value $T_{FIX}$, the cut teeth part detection provided in step 306 is not a normal cut teeth part detection. The process then proceeds to step 312.

In step 312, the electromagnetic spill valve OFF time TSPST obtained in a main routine of the fuel injection control described later with reference to Fig. 11 is added to the current time. The sum is set in an output compare register.

In step 312, the ECU 71 performs the electromagnetic spill valve drive control process as in the case of the first embodiment. The ECU 71 turns OFF (opens) the electromagnetic spill valve 23 after determining that the electromagnetic spill valve OFF time TSPST stored in the output compare register has elapsed since the input of the last engine revolution pulse. Thus, the fuel injection is stopped.

As has been described above, a determination as to whether or not the cut teeth part detection provided in step 306 is genuine is made in step 308. When the cut teeth part detection proves genuine, the electromagnetic spill valve 23 is closed in step 310 so that the fuel injection is started. If it is determined in step 308 that the cut teeth part detection proves false, the electromagnetic spill valve 23 is opened in step 312 after the predetermined electromagnetic spill valve OFF time TSPST has elapsed. Thus, an uninterrupted injection deriving from mistaking the missing teeth for the cut teeth part can be positively prevented.

In this way, the amount of the smoke produced is reduced, and the quality of the exhaust emission is improved. On top of that, it is possible to reduce the fuel injection amount and to prevent the cracking torque from being reduced.

When a negative answer is yielded in any of steps 302 and 303, the engine condition is not in an extremely low revolution speed period, that is, the engine revolution speed is higher than the detection limit revolution speed $NE_{LIM}$.

Therefore, the missing teeth are prevented from occurring and the detection of the cut teeth part is always genuine. When a negative answer is yielded in any of steps 302 - 306, the process proceeds to step 314, whereupon the normal process for the fuel injection control responsive to the engine condition is performed.

In step 314, a determination is made as to whether or not the NE interrupt count CNIRQ for the current NE interrupt is equal to 3. When it is found that CNIRQ = 3, the electromagnetic spill valve 23 is closed in step 316 so that the fuel injection is started. When it is determined in step 314 that CNIRQ is not equal to 3, step 316 is not executed and the process proceeds to step 318.

Subsequently, in step 318, a determination is made as to whether or not the NE interrupt count CNIRQ for the current NE interrupt is the electromagnetic spill valve OFF count value CANG. The electromagnetic spill valve OFF count value CANG is a value calculated through a main routine described later with reference to Fig. 11. A specific description of the method of calculating the electromagnetic spill valve OFF count value CANG is omitted for the sake of convenience.

If a positive answer is yielded in step 318, the process proceeds to step 320. In step 320, an electromagnetic spill valve OFF remaining time TSP obtained through the main routine of the fuel injection control described later with reference to Fig. 11 is added to the current time. This sum is set in the output compare register.

The ECU 71 performs the electromagnetic spill valve drive control process in step 320, wherein the ECU 71 turns OFF (opens) the electromagnetic spill valve 23 after determining that the electromagnetic spill valve OFF remaining time TSP stored in the output compare register has elapsed since the input of the engine revolution pulse corresponding to the electromagnetic spill valve OFF count value CANG.

When the process in step 320 is completed, or when a negative answer is yielded in step 318, the process proceeds to step 322. Steps 322 and 234 are processes for obtaining a reference pulse interval TS that is used in the main routine process described later. In step 322, a determination is made as to whether or not the NE interrupt count CNIRQ for the current NE interrupt is equal to a sum of the aforementioned electromagnetic spill valve OFF count value CANG and 1 (CANG + 1).

If it is determined that the current NE interrupt count CNIRQ is equal to (CANG + 1), the process proceeds to step 324, whereupon the NE pulse interval TNINT obtained in step 300 is stored as the reference pulse interval TS. If it is determined in step 322 that the current NE interrupt count CNIRQ is not equal to (CANG + 1), the process of step 324 is not performed and the fuel injection control process is terminated.

Subsequently, a description will now be given, with reference to Fig. 11, of the main routine of the fuel injection control process according to this embodiment.

Steps 400 and 402 shown in the figure are processes for obtaining the electromagnetic spill valve OFF count value CANG and the electromagnetic spill valve OFF remaining time TSP which are used in the normal process described before.

In step 400, the final injection amount QFIN is calculated on the basis of the engine revolution speed (NE) and the opening of the throttle valve 58 (referred to as a throttle opening ACCP). The final injection amount QFIN is a fuel injection amount that is most suitable for the current engine condition determined on the basis of the engine revolution speed NE and the throttle opening ACCP. While the engine revolution speed NE and the throttle opening ACCP are used in this embodiment to obtain the final injection amount QFIN, an engine water temperature (THW) may additionally be used as a correction factor.

When the final injection amount QFIN is calculated in step 400, a final spill angle QANG is calculated in step 402 on the basis of the engine revolution speed (NE) and the final injection amount QFIN calculated in step 400. The final spill angle QANG is obtained as an angle of the crank rotation required for the injection of the fuel amounting to the final injection amount QFIN.

Once the final spill angle QANG is calculated, the electromagnetic spill valve OFF count value CANG and the electromagnetic spill valve OFF remaining time TSP can be calculated accordingly. In this embodiment, the crank angle corresponding to one engine revolution pulse is 7.5° CA so that the final spill angle QANG is given by the following equation.

$$QANG = 7.5 \text{ X } (CANG - 3) + \Theta REM \qquad (1)$$

In the above equation, 3 is subtracted from the electromagnetic spill valve OFF count value CANG because the fuel injection is set to start at CNIRQ = 3 in step 314 shown in Fig. 10.

In the equation (1) above, ΘREM indicates a remaining angle smaller than the crank angle (7.5° CA) corresponding to one pulse.

Thus, the electromagnetic spill valve OFF count value CANG is obtained as a sum of 3 and an integral quotient obtained by dividing the final spill angle QANG by 7.5° CA (see the equation (2) below). The remaining angle ΘREM is obtained as a remainder obtained when the final spill angle QANG is divided by 7.5° CA.

$$CANG = (QANG/7.5)_{mod} + 3 \quad (2),$$

where $(QANG/7.5)_{mod}$ indicates an integral quotient obtained by dividing the final spill angle QANG by 7.5° CA.

Since the remaining angle ΘREM obtained as described above is smaller than the crank angle (7.5° CA) corresponding to one pulse, ΘREM is not subject to control using the NE interrupt count CNIRQ. For this reason, the electromagnetic spill valve OFF remaining time TSP is obtained by converting the remaining angle ΘREM into time. The fuel having a volume defined by the final injection amount QFIN is configured to be injected by opening the electromagnetic spill valve 23 when the electromagnetic spill valve OFF remaining time TSP has passed after the detection of the electromagnetic spill valve OFF count value CANG.

The electromagnetic spill valve OFF remaining time TSP can be obtained according to the equation below on the basis of the reference pulse interval TS, the reference pulse interval TS being the NE pulse interval TNINT when the electromagnetic spill valve OFF count value obtained through step 324 of Fig. 10 is equal to (CANG + 1).

$$TSP = (\Theta REM/7.5) \times TS \quad (3)$$

Subsequently, in step 404, the electromagnetic spill valve OFF time TSPST that is used in the fuel injection control process in the extremely low revolution speed period is obtained. Similarly to step 107 (see Fig. 4) of the first embodiment, the electromagnetic spill valve OFF time TSPST in this embodiment is obtained by referring to the map shown in Fig. 6 on the basis of the NE interrupt count CNIRQ and the NE pulse interval TNINT.

Once the electromagnetic spill valve OFF time TSPST is obtained in step 404, a process for correcting the electromagnetic spill valve OFF time TSPST is performed in the following steps 406 and 407.

In step 406, a pump characteristic correction is applied to the electromagnetic spill valve OFF time TSPST obtained in step 404. Generally, fuel injection pumps 1 have different pump characteristics. These differences derive from errors in building the pump unit. The characteristic difference of the pump has a large effect especially when the engine revolution speed is extremely low. Hence, it is preferred that the electromagnetic spill valve OFF time TSPST be corrected for the pump characteristic in order to perform a high-precision fuel injection control process.

Accordingly, this embodiment is configured such that the electromagnetic spill valve OFF time TSPST is corrected in accordance with a pump characteristic correction value VRP on the basis of a map shown in Fig. 12. By using this construction, the electromagnetic spill valve OFF time TSPST can be determined properly even when different fuel injection pumps 1 have different pump characteristics.

In step 408, a starting step-up correction is applied to the electromagnetic spill valve OFF time TSPST. The starting step-up correction is applied such that the time that elapsed since the turning ON of the ignition switch 78 is measured and the electromagnetic spill valve OFF time TSPST is gradually extended after a predetermined time has elapsed since the start of the engine.

Fig. 13 is a map showing a starting step-up correction factor $K_{STAON}$. The electromagnetic spill valve OFF time TSPST is corrected by multiplying the electromagnetic spill valve OFF time TSPST by the starting step-up correction factor $K_{STAON}$.

As shown in the figure, the electromagnetic spill valve OFF time TSPST remains unmodified for a period of 2 seconds following the turning ON of the ignition switch 78 since $K_{STAON}$ = 1 in this period of time. After an elapse of two seconds, the starting step-up correction factor $K_{STAON}$ increases gradually, with the result that the electromagnetic spill valve OFF time TSPST is extended accordingly.

Thus, in case the engine is not started even after a predetermined period of time (in this embodiment, 2 seconds), the fuel injection amount is stepped up by extending the electromagnetic spill valve OFF time TSPST so as to ensure an improved startability. In order to provide an upper limit to the starting step-up correction factor $K_{STAON}$, the starting step-up correction factor $K_{STAON}$ is configured not to increase after an elapse of 10 seconds.

When a series of processes above are completed, the main routine of the fuel injection control process ends.

[FOURTH EMBODIMENT]

A description will now be given, with reference to Figs. 14 through 17, of the fuel injection amount control process according to a fourth embodiment executed by the ECU 71. Fig. 14 is a timing chart which explains a basic principle of this embodiment. The flowchart of Fig. 15 shows the fuel injection control process according to the fourth embodiment executed by the ECU 71. This embodiment corresponds to claim 5.

First, a description will be given, with reference to Fig. 14, of the basic principle of this embodiment. An occurrence of an extremely low revolution speed is limited to the vicinity of a time at which the engine is started. Causes for the extremely low revolution speed include (1) a fatigue of the battery and (2) an increase in the friction due to a low temperature.

According to the engine revolution variation characteristic indicated by a solid line (the arrow A) in Fig. 14, a fatigue of the battery does not exist and the engine water temperature (THW) is relatively high. According to the engine revolution variation characteristic indicated by a dashed line (the arrow B), a fatigue of the battery does not exist and the engine water temperature THW is relatively low. According to the engine revolution variation characteristic indicated by a broken line (the arrow C), a fatigue of the battery exists and the engine water temperature THW is relatively high. The water temperature (THW) is used as a representative value of the engine temperature.

As shown in the figure, in case no fatigue exists in the battery and the engine water temperature THW is high, the engine revolution speed is higher than the detection limit revolution speed $NE_{LIM}$. In this condition, the engine revolution pulses can be detected over the entire cycle.

In case the engine water temperature THW is low, the engine revolution speed drops below the detection limit revolution speed $NE_{LIM}$ during a cycle. In other words, the engine revolution pulses are undetected for a certain period of time.

The engine revolution variation pattern for a high engine water temperature and the engine revolution variation pattern for a low engine water temperature are substantially the same. Thus, with the engine water temperature going up or down, the engine revolution characteristic is shifted up or down in the figure while maintaining a predetermined engine revolution variation pattern.

Unlike the above-mentioned patterns, the engine revolution pattern for a case in which a fatigue of the battery exists differs from the engine revolution variation patterns (indicated by the arrows A and B) for a case in which a fatigue of the battery does not exist.

Specifically, the engine revolution variation pattern for a case in which a fatigue of the battery exists exhibit a unique characteristic in that the engine revolution speed sharply drops near TDC. Accordingly, the engine revolution pulses fail to be detected for a certain period of time even if the engine water temperature THW is relatively high.

As has been described, there are two engine revolution variation patterns depending on whether or not the battery fatigue is present. Therefore, if the electromagnetic spill valve OFF time TSPST is set solely on the basis of the NE interrupt count CNIRQ and the NE pulse interval TNINT, there is a likelihood that the electromagnetic spill valve 23 is opened at a wrong timing, thus diminishing the precision of the fuel control.

Accordingly, this embodiment is configured such that the electromagnetic spill valve OFF time TSPST is corrected according to the engine water temperature THW.

Specifically, we take advantage of the fact that if the battery is normal and the engine water temperature THW is relatively high, the engine revolution pulses are detected over the entire cycle. We can thus determine that a fatigue of the battery exists when the extremely low revolution speed is observed even if the engine water temperature THW is high.

Thus, when the extremely low revolution speed is observed even if the engine water temperature THW is high, the electromagnetic spill valve OFF time TSPST is corrected in accordance with the engine revolution variation pattern (indicated by the arrow C) that is exhibited when a fatigue of the battery exists. As result, the timing at which the electromagnetic spill valve 23 is opened can be properly set and the high-precision fuel injection control can be performed.

A description will now be given, with reference to the flowchart of Fig. 15, of the fuel injection control process according to the fourth embodiment executed by the ECU 71.

The fuel injection control process shown in Fig. 15 is also executed as an NE interrupt process. In step 500, a determination is made as to whether or not the current engine condition satisfies a condition (starting control execution condition) under which the starting control is allowed. That the starting control execution condition is met means, for example, that the ignition switch 78 is turned ON and the engine revolution speed is below 150 rpm. In other words, this condition is an extremely low revolution speed condition occurring at the start of the engine.

When it is determined in step 500 that the aforementioned starting control execution condition is not met, it is not necessary to perform the fuel injection control in the extremely low revolution speed period which is executed in step 502 and beyond. Hence, this routine is terminated. When it is determined in step 500 that the starting control execution condition is met, the process proceeds to step 502.

In step 502, the ECU 71 calculates the NE pulse interval TNINT on the basis of the input engine revolution pulses and increments the NE interrupt count CNIRQ.

Subsequently, the ECU 71 calculates a reference electromagnetic spill valve OFF time TSPST0 (hereinafter, simply referred to as reference OFF time TSPSTO) by referring to the two-dimensional map (not shown) of the NE pulse interval TNINT and the NE interrupt count CNIRQ which are stored in the ROM 82, the calculation being based on the NE pulse interval TNINT and the NE interrupt count CNIRQ calculated in step 502.

Subsequently, in step 506, the ECU 71 determines a TSPST temperature correction factor $K_{TSPST}$ in accordance with the engine water temperature THW calculated on the basis of the output of the water temperature 75. The TSPST temperature correction factor $K_{TSPST}$ is obtained from a one-dimensional map of the engine water temperature THW shown in Figs. 16 and 17.

Fig. 16 is a map stored in the ROM 82 of the ECU 71. Fig. 17 is a graph showing the relationship between the engine water temperature THW and the TSPST temperature correction factor $K_{TSPST}$.

Figs. 16 and 17 indicate that the TSPST temperature correction factor $K_{TSPST}$ for a low water temperature condition (in this embodiment, below -20°C) is 1 ($K_{TSPST=1}$) and that the TSPST water temperature correction factor $K_{TSPST}$ gradually increases as the engine water temperature THW rises.

Subsequently, in step 508, the reference OFF time TSPST0 calculated in step 502 is corrected according to the TSPST temperature correction factor $K_{TSPST}$ obtained in step 506. The result of this correction is designated as the electromagnetic spill valve OFF time TSPST. The electromagnetic spill valve OFF time TSPST is added to the current time, and the sum is set in the output compare register (not shown).

As described above, the TSPST temperature correction factor is configured to rise gradually as the engine water temperature THW rises. Therefore, if the engine water temperature THW is low (below -20°C) and it is determined in step 500 that the starting control execution condition is met, $K_{TSPST}$ = 1 so that the reference OFF time TSPST0 calculated in step 502 is used unmodified as the electromagnetic spill valve OFF time TSPST.

When the engine water temperature THW rises, the TSPST temperature correction factor $K_{TSPST}$ becomes greater accordingly. Hence, the amount by which the reference OFF time TSPST0 is corrected according to the TSPST temperature correction factor $K_{TSPST}$ becomes great. That is, when the engine water temperature THW rises while the starting control execution condition is met, the amount by which the reference OFF time TSPST0 is corrected according to the TSPST temperature correction factor $K_{TSPST}$ becomes great.

As has been described, if the engine water temperature THW is high and the engine revolution speed is extremely low (that is, if the starting control execution condition is met), it means that there is a fatigue of the battery. The TSPST temperature correction factor $K_{TSPST}$ is set to largely reflect the engine revolution pattern corresponding to the fatigue of the battery as the engine water temperature THW rises.

Thus, by executing the fuel injection control according to this embodiment, it is possible to appropriately set the electromagnetic spill valve 23 opening timing in a low-temperature condition so that the setting is adapted to the revolution variation pattern resulting from a great friction. In the high-temperature condition, it is possible to appropriately set the electromagnetic spill valve 23 opening timing adapted to the revolution variation pattern resulting from the fatigue of the battery. In this way, a high-precision fuel injection control can be performed.

Figs. 18 and 19 show a variation of the aforementioned fourth embodiment. Fig. 18 is a flowchart showing the fuel injection control process according to the variation of the fourth embodiment. Fig. 19 is a diagram which explains a principle for calculating the electromagnetic spill valve OFF time TSPST in this variation.

Step 600 shown in Fig. 16 is the same as step 500 of Fig. 15. A determination is made in step 600 as to whether or not the starting control execution condition is met.

If it is determined in step 600 that the starting control execution condition is met, the ECU 71 calculates, in step 602, the NE interrupt pulse interval TNINT on the basis of the input engine revolution pulses and increments the NE interrupt count CNIRQ.

Subsequently, the ECU 71 calculates the high-temperature electromagnetic spill valve OFF time TSPSTH (hereinafter, simply referred to as high-temperature OFF time TSPSTH) and the low-temperature electromagnetic spill valve OFF time TSPSTL (hereinafter, referred to as low-temperature OFF time TSPSTL) on the basis of a preset two-dimensional map of the NE pulse interval TNINT and the NE interrupt count CNIRQ (the construction of this embodiment includes two maps, that is, the map for the high-temperature condition and the map for the low-temperature condition).

In this embodiment, the low engine water temperature THW of -20°C and the high engine water temperature THW of +40°C are set.

Subsequently, in step 604, the electromagnetic spill valve OFF time TSPST is calculated on the basis of the high-temperature OFF time TSPSTH and the low-temperature OFF time TSPSTL.

A description of a specific method of calculating the electromagnetic spill valve OFF time is given with reference to Fig. 19. In Fig. 19, the engine water temperature is plotted in the x-axis and the electromagnetic spill valve OFF time TSPST is plotted in the y-axis.

The high-temperature OFF time TSPSTH and the low-temperature OFF time TSPSTL are obtained through the process of step 602. The variation in the electromagnetic spill valve OFF time TSPST in the intervening period shows a straight-line characteristic such that the electromagnetic spill valve OFF time TSPST becomes longer as the temperature rises. When the electromagnetic spill valve OFF time TSPST for a given engine water temperature THW is to be determined according to Fig. 19, triangles a, b and c shown in the figure may be taken advantage of. That is, since the variation in the electromagnetic spill valve OFF time TSPST with respect to the engine water temperature substantially exhibits a straight-line characteristic, the following equation is derived from the similarity between these triangles.

$$(TSPSTH-TSPSTL): (TSPST-TSPSTL) = \{40-(-20)\}:\{THW-(-20)\}$$

Solving the above equation for the electromagnetic spill valve OFF time TSPST,

$$TSPST = [(TSPSTH - TSPSTL) \times \{THW - (-20)\}] \div \{40 - (-20)\} + TSPSTL \qquad (4)$$

Since the high-temperature OFF time TSPSTH and the low-temperature OFF time TSPSTL in the equation (4) are known through step 602, the most appropriate electromagnetic spill valve OFF time TSPST for the given temperature THW is determined by substituting in the equation (4) the engine water temperature THW calculated according to the output of the water temperature sensor 75.

When the electromagnetic spill valve OFF time TSPST is calculated as described above, the ECU 71 adds the calculated electromagnetic spill valve OFF time TSPST to the current time, and sets the sum in the output compare register.

As has been described with reference to Fig. 19, the variation characteristic of the electromagnetic spill valve OFF time TSPST is such that the electromagnetic spill valve OFF time TSPST becomes longer as the temperature rises. Therefore, if the engine water temperature THW rises while the starting control execution condition is met, the electromagnetic spill valve OFF time TSPST calculated accordingly also increases.

As described before, if the engine water temperature THW is high and the engine revolution speed is extremely low (that is, if the starting control execution condition is met), it means that there is a fatigue of the battery.

The revolution variation pattern for the low-temperature condition and the revolution variation pattern for the high-temperature condition are respectively reflected in the low-temperature map and the high-temperature map respectively used in determining the low-temperature OFF time TSPSTL and the high-temperature OFF time TSPSTH, respectively.

Thus, by executing the fuel injection control of this embodiment, it is possible to appropriately set the electromagnetic spill valve 23 opening timing in the low-temperature condition so that the setting is adapted to the revolution variation pattern resulting from a great friction. In the high-temperature condition, it is possible to appropriately set the electromagnetic spill valve 23 opening timing so that the setting is adapted to the revolution variation pattern resulting from the fatigue of the battery. In this way, a high-precision fuel injection control can be performed.

[FIFTH EMBODIMENT]

A description will now be given, with reference to Figs. 21 and 22, of the fuel injection amount control process according to a fifth embodiment. This embodiment corresponds to claim 6.

The foregoing first through fourth embodiments are configured such that the electromagnetic spill valve OFF time TSPST is calculated from the NE interrupt count CNIRQ and the NE pulse interval TNINT in an extremely low revolution speed period.

In these embodiments, the electromagnetic spill valve OFF time TSPST can be calculated only if the NE interrupt count CNIRQ has already been determined. Since the NE interrupt count CNIRQ are not provided before the cut teeth part is detected (that is, before the detection of the reference signal), it is impossible with these embodiments to calculate the electromagnetic spill valve OFF time TSPST. For a high-precision fuel injection control process, it is preferred that the electromagnetic spill valve 23 is controlled to be opened or closed in accordance with the engine condition even before the detection of the cut teeth part.

This embodiment is characterized in that the NE pulse interval TNINT is detected before the detection of the reference signal. The angular position is estimated from the variation in the NE pulse interval TNINT. The electromagnetic spill valve 23 is controlled to be opened or closed accordingly.

Since the revolution sensor 35 outputs engine revolution pulses even before the cut teeth part is detected, it is possible to determine the NE pulse interval TNINT when two engine revolution pulses have been output.

As described in the fourth embodiment, when there is no fatigue in the battery, the engine revolution variation patterns are substantially the same. As shown in Fig. 14, the pattern shifts between the high revolution speed period and the low revolution speed period depending on the variation in the engine water temperature THW (see the characteristic indicated by the arrow A and the characteristic indicated by the arrow B).

Further, there is a correlation between the value of the NE interrupt count CNIRQ and the value of the NE pulse interval TNINT. This correlation will be explained by referring to Fig. 14. At a timing CNIRQ = 0, the engine revolution speed is high so that the NE pulse interval TNINT is short. At a timing CNIRQ = 9 near TDC, the engine revolution speed is low so that the NE pulse interval TNINT is long. Further, as described before, the engine revolution speed varies according to the variation in the engine water temperature THW. Hence, the NE pulse interval TNINT varies according to the variation in the engine water temperature THW.

To summarize the above, it is possible to estimate the value of the NE interrupt count CNIRQ on the basis of the NE pulse interval TNINT and the engine water temperature THW. Fig. 21 is a two-dimensional map having as parameters the NE pulse interval TNINT and the engine water temperature THW obtained according to the principle described above. This two-dimensional map is obtained through an experiment performed in a laboratory. By using the two-dimensional map shown in Fig. 21, it is possible to estimate the NE interrupt count CNIRQ on the basis of the NE pulse interval TNINT and the engine water temperature THW.

A description will now be given, with reference to Fig. 21, of the fuel injection control executed according to the above-described principle.

In step 700, in response to the engine revolution pulse output by the revolution sensor 35 (engine revolution pulses are immediately output upon a start of the engine), the ECU 71 increments the engine revolution pulse count C before the reference timing (hereinafter, simply referred to as pre-reference pulse count C) by one.

The pre-reference pulse count C differs from the NE interrupt count CNIRQ and is started immediately after the engine is started. The pre-reference pulse count C is configured to be initialized so that C = 0 when the cut teeth part is detected.

Subsequently, in step 702, a determination is made as to whether or not the pre-reference pulse count C measured in step 700 is equal to 2. As described later, this determination as to whether or not the pre-reference pulse count C is equal to 2 is made so as to determine the timing at which the NE pulse interval TNINT is calculated.

It is possible to calculate the NE pulse interval TNINT at a point of time at which two or more engine revolution pulses have been input. In this embodiment, the NE pulse TNINT is calculated at a timing at which two engine revolution pulses have been input, that is, when the pre-reference pulse count C is equal to 2.

Subsequently, in step 704, the engine water temperature THW is calculated on the basis of the water temperature 75. A determination is made as to whether or not the calculated engine water temperature THW is below 0°C.

If a positive answer is yielded in steps 702 and 704, the process proceeds to step 706. In step 706, since the pre-reference pulse count C is equal to 2, the NE pulse interval TNINT is calculated on the basis of the timings at which the two engine revolution pulses are input. Subsequently, the NE interrupt count CNIRQ is estimated by referring to the two-dimensional map shown in Fig. 21, the estimation being based on the calculated NE pulse interval TNINT and the engine water temperature THW obtained in step 704.

If a negative answer is yielded in step 702, it means that the timing is not right for calculating the NE pulse interval TNINT. The process then proceeds to step 708 without step 706 being executed. If a negative answer is yielded in step 704, it means that the engine water temperature THW is relatively high and the satisfactory startability is ensured without the fuel injection control being performed until the cut teeth part is detected. The process then proceeds to step 708 without step 706 being executed.

In step 708, a determination is made as to whether or not the value of the NE interrupt count CNIRQ estimated in step 706 is such that 1 < CNIRQ < 10.

Referring to Fig. 14 again, the range where the NE interrupt count CNIRQ is such that 1 < CNIRQ < 10 corresponds to the range where the electromagnetic spill valve 23 is closed (turned ON), as shown in Fig. 14(C). The range where the NE interrupt count CNIRQ is such that CNIRQ ≥ 10 corresponds to the range where the electromagnetic spill valve 23 is open (turned OFF).

Hence, if a determination regarding the NE interrupt count CNIRQ in step 708 is such that 1 < CNIRQ < 10, the process proceeds to step 710, whereupon the electromagnetic spill valve 23 is closed (turned ON). If a determination regarding the NE interrupt count CNIRQ in step 708 is such that CNIRQ ≥ 10, the process proceeds to step 712, whereupon the electromagnetic spill valve 23 is opened (turned OFF).

Subsequently, in step 714, various other control processes using the NE interrupt count CNIRQ are executed.

This embodiment, as applied to the starting control of the engine before the reference timing (cut teeth part) is detected, is configured such that the electromagnetic spill valve 23 is controlled to be opened or closed upon the estimation of the NE interrupt count CNIRQ on the basis of the NE pulse interval CNINT and the engine water temperature THW. Hence, it is possible to restrain the production of the smoke in a period that does not yield to the control of the foregoing embodiments. Moreover, the exhaust emission is improved as compared to the uninterrupted injection.

While the embodiments described so far are configured such that the engine water temperature THW is used as a parameter for estimating the NE interrupt count CNIRQ, it is also possible to use the engine oil temperature or the intake air temperature as the parameter instead of the engine water temperature THW.

[SIXTH EMBODIMENT]

A description will now be given, with reference to Fig. 23, of the fuel injection amount control process according to a sixth embodiment executed by the ECU 71. This embodiment also corresponds to claim 6.

Like the fifth embodiment described earlier, this embodiment has an object of controlling the electromagnetic spill valve 23 to be opened or closed even before the reference timing (cut teeth part) is detected. First, a description of a principle of this embodiment is given.

As has been described in the fifth embodiment, it is impossible to control the opening and closing of the electromagnetic spill valve 23 using the NE interrupt count CNIRQ before the cut teeth part is detected, that is, before the reference signal is detected. However, it is possible to obtain the NE pulse interval TNINT if two or more engine revolution pulses are output after a start of the engine.

Accordingly, this embodiment is configured such that the previous NE pulse interval $TNINT_{(i-1)}$ calculated in the previous NE interrupt is stored. A determination is then made as to whether the engine revolution speed is increasing or dropping on the basis of the previous NE pulse interval $TNINT_{(i-1)}$ and the current NE pulse interval $TNINT_{(i)}$ calculated in the current NE interrupt. On the basis of this determination, the opening and closing control of the electromagnetic spill valve 23 is performed.

A more specific description of the above will now be given with reference to Fig. 9.

Referring to Fig. 9, the electromagnetic spill valve 23 is closed (turned ON) when the engine revolution speed is dropping. The electromagnetic spill valve 23 is opened (turned OFF) when the engine revolution speed is increasing.

The trend of the variation in the engine revolution speed can be detected from the NE pulse interval TNINT. Specifically, if a comparison between the previous NE pulse interval $TNINT_{(i-1)}$ and the current NE pulse interval $TNINT_{(i)}$ yielded a result that $TNINT_{(i-1)} > TNINT_{(i)}$, it is determined that the engine revolution speed is dropping. If $TNINT_{(i-1)} < TNINT_{(i)}$, it is determined that the engine revolution speed is increasing.

If $TNINT_{(i-1)} > TNINT_{(i)}$, the electromagnetic spill valve 23 is closed. If $TNINT_{(i-1)} < TNINT_{(i)}$, the electromagnetic spill valve 23 is opened. With this arrangement, it is possible to appropriately control the electromagnetic spill valve 23 to be opened or closed in accordance with the engine condition even before the reference timing (cut teeth part) is detected.

A description will now be given, with reference to Fig. 22, of the fuel injection control process executed according to the principle described above.

In step 800, a determination is made as to whether or not the cut teeth part is detected (that is, if the reference timing is detected). If it is determined that the cut teeth part is detected, the NE interrupt count CNIRQ can be obtained in a normal manner. Hence, this routine is terminated because a process preceding a cut teeth part detection in step 802 and beyond is not necessary.

If it is determined in step 800 that the cut teeth part has not been detected, the process proceeds to step 802. In step 802, the ECU 71 calculates the NE pulse interval TNINT on the basis of the engine revolution pulses output by the revolution sensor 35 and designates the calculated interval as the current NE pulse interval $TNINT_{(i)}$. A process for comparing the previous NE pulse interval $TNINT_{(i-1)}$ calculated in the previous NE interrupt and stored in the RAM 84 with the current NE pulse interval $TNINT_{(i)}$ is performed.

If a positive answer is yielded in step 802 ($TNINT_{(i-1)} > TNINT_{(i)}$), it is determined that the engine revolution speed is dropping. Therefore, the process proceeds to step 804, whereupon the electromagnetic spill valve 23 is closed (turned ON).

If a negative answer is yielded in step 802 ($TNINT_{(i-1)} < TNINT_{(i)}$), it is determined that the engine revolution speed is increasing. Therefore, the process proceeds to step 806, whereupon the electromagnetic spill valve 23 is opened (turned OFF).

In the subsequent step 808, the NE interrupt count CNIRQ is set equal to 10. This setting is done because the engine revolution speed starts to increase approximately when the NE interrupt count CNIRQ is equal to 10, as shown in Fig. 19. By estimating the NE interrupt count CNIRQ in this way, other control processes using the NE interrupt count CNIRQ can be executed before the cut teeth part is detected.

As has been described above, this embodiment is configured such that a determination is made as to whether the engine revolution speed is increasing or dropping on the basis of the previous NE pulse interval $TNINT_{(i-1)}$ and the current $TNINT_{(i)}$, the control of the opening and closing of the electromagnetic spill valve 23 being done on the basis of this determination. Therefore, according to this embodiment, production of the smoke can be restrained in a period not subject to the control of the first through fourth embodiments. Further, improvement in the exhaust emission can be achieved as compared to the conventional uninterrupted injection scheme.

[SEVENTH EMBODIMENT]

A description will now be given, with reference to Fig. 24, of the fuel injection amount control process according to a seventh embodiment executed by the ECU 71. This embodiment corresponds to claim 7.

Like the fifth embodiment described earlier, this embodiment also has the object of controlling the electromagnetic spill valve 23 to be opened or closed even before the reference timing (cut teeth part) is detected. First, a description will be given of a principle.

The control of the opening and closing of the electromagnetic spill valve 23 before the detection of the reference timing (cut teeth part) is required in an engine condition where the engine water temperature THW is low. Specifically, in a condition where the engine water temperature THW is low, the cranking rotation speed is low and the startability is unsatisfactory. It is in the condition like this that the fuel injection even before the detection of the reference timing should be executed so as to improve the startability. On the other hand, in a condition where the engine water temperature THW is so high that the engine can be restarted immediately after it is stopped, the cranking rotation speed is high and the startability is satisfactory. In this case, the execution of the fuel injection control can wait until the detection of the reference timing without affecting the startability unfavorably.

Accordingly, this embodiment is configured such that the engine water temperature THW is detected before the reference timing is detected. If the engine water temperature THW is below a predetermined level (in this embodiment, 0°C), the electromagnetic spill valve 23 is closed so as to effect the fuel injection. If the engine water temperature is above the predetermined level, the fuel injection is prohibited.

A description will now be given, with reference to Fig. 23, of the fuel injection control executed according to the principle described above.

In step 900, a determination is made as to whether or not the cut teeth part is detected (the reference timing is detected). Since the NE interrupt count CNIRQ can be determined if the cut teeth part is detected, the process preceding a cut teeth part detection in step 902 and beyond is not necessary, this routine is terminated.

If it is determined in step 900 that the cut teeth part is not detected, the process proceeds to step 902. In step 802, the ECU 71 determines the engine water temperature THW on the basis of the output of the water temperature sensor 75 and makes a determination as to whether or not the engine water temperature THW is below 0°C.

If a negative answer is yielded in step 902 (THW $\leq$ 0), that is, if the engine temperature THW is low, the process proceeds to step 904, whereupon the electromagnetic spill valve 23 is closed so as to start the fuel injection. If a positive answer is yielded in step 902 (THW > 0), that is, when the engine temperature THW is high, the process proceeds to step 904, whereupon the electromagnetic spill valve 23 is opened so as to stop the fuel injection.

According to this embodiment, the startability can be improved irrespective of the engine temperature (engine water temperature THW). Since the starting process is completed in a short time if the engine water temperature THW is high, the startability does not suffer by conducting the fuel injection control process after the detection of the first reference timing. If the engine water temperature THW is low, the startability is poor. Hence, it is necessary to start the fuel injection at the earliest possible timing. Since the fuel injection control method of this embodiment is configured such that an uninterrupted fuel injection is performed before the first reference timing, the startability is improved.

[EIGHTH EMBODIMENT]

A description will now be given, with reference to Figs. 24 and 25, of a fourth embodiment of the present invention. This embodiment concerns an extremely low revolution speed detection device used in the fuel injection amount control process described in the foregoing embodiments. Fig. 24 is a timing chart which explains a basic principle of this embodiment. The flowchart of Fig. 25 shows the extremely low revolution speed detecting process executed by the extremely low revolution speed detection device. This embodiment corresponds to claim 8.

First, a description will be given, with reference to Fig. 24, of the basic principle of this embodiment.

A description will be given of a generally practiced revolution speed detection process. In this process, an engine revolution speed (NE) detection method is conducted wherein the time required for the crank shaft to rotate 180° CA (hereinafter, referred to as a 180° CA rotation time T180) is calculated, and the engine revolution speed (average revolution speed) is calculated by substituting the calculated 180°CA rotation time T180 in the following equation.

$$NE_{(rpm)} = 60_{(S)}/(T180_{(S)}\ X\ 2) \qquad (5)$$

180° CA revolution time T180 is calculated by calculating a rotation time T45 for 45° CA rotation (hereinafter, referred to as 45°CA rotation time T45) and by adding 45°CA rotation time T45 calculated at four timings.

The above-described calculation will be described in detail by referring to Fig. 24. In the following description, it is assumed that the crank angle corresponding to one engine revolution pulse is 11.25° CA.

The calculation of the 45° CA rotation time T45 is made on the basis of the value of the NE interrupt count CNIRQ. In the example shown, 45° CA rotation time T45 is calculated at timings at which the NE interrupt count CNIRQ is equal to 1, 5, 9 and 13.

For example, 45° CA rotation time $T45_{(1)}$ is determined by storing the time corresponding to CNIRQ = 13 and by calculating the difference between the CNIRQ = 13 timing and the time at which the engine rotation pulse corresponding to CNIRQ = 1 is output. Likewise, $T45_{(1)}$ - $T45_{(5)}$ indicated in Fig. 24 are calculated at respective predetermined timings determined by the value of the NE interrupt count CNIRQ.

At the timings at which the NE interrupt count CNIRQ is equal to 1, 5, 9 and 13, 180° CA rotation time T180 is calculated. For example, in the example shown, 180° CA rotation time $T180_{(1)}$ is calculated according to the following equation at the timing at which the NE interrupt count CNIRQ is equal to 13.

$$T180_{(1)} = T45_{(1)} + T45_{(2)} + T45_{(3)} + T45_{(4)} \qquad (6)$$

At the timing at which the NE interrupt count CNIRQ is equal to 1, 180° CA rotation time $T180_{(2)}$ is calculated according to the following equation.

$$T180_{(2)} = T45_{(2)} + T45_{(3)} + T45_{(4)} + T45_{(5)} \qquad (7)$$

Thus, the conventional revolution speed detection device employs a method whereby 45° CA rotation time T45 and the 180° CA rotation time T180 are calculated at intervals corresponding to 45° CA crank angle and the engine revolution speed (average revolution speed) is calculated according to the equation (5).

The above-described conventional revolution speed detection method enables an accurate engine revolution speed to be obtained if there is not a missing teeth phenomenon. However, there is a likelihood that the missing teeth phenomenon occurs in the extremely low revolution speed period, as described in the foregoing embodiments. When the missing teeth phenomenon occurs, the conventional revolution speed detection method is no longer capable of detecting an accurate revolution speed. The reason for this inability is given in the following.

As shown in Fig. 24, it is assumed that the engine revolution pulses corresponding to CNIRQ = 7 - 9 cause missing teeth. In this case, 45° CA rotation time $T45_{(1)}$ corresponding to CNIRQ = 13 - 1 and 45° CA rotation time $T45_{(2)}$ corresponding to CNIRQ = 1 - 5 can be calculated accurately. However, 45° CA rotation time (specifically indicated by $MT45_{(3)}$) corresponding to CNIRQ = 5 - 9 cannot be accurately calculated.

When the engine revolution pulses corresponding to CNIRQ = 7 - 9 cause the missing teeth, the ECU 71 mistakes the engine revolution pulses (the pulse corresponding to CNIRQ = 10 under a condition where there are no missing teeth) output immediately after the missing teeth for a pulse corresponding to CNIRQ = 7. Thus, 45° CA rotation time $MT45_{(3)}$ calculated when the missing teeth phenomenon occurs becomes longer than the 45° CA rotation time $MT45_{(3)}$ obtained in a normal condition ($MT45_{(3)} > MT45_{(3)}$).

Because of the missing teeth phenomenon, the ECU 71 is unable to detect the pulse corresponding to CNIRQ = 13 when the ECU 71 tries to calculate 45 CA rotation time $T45_{(4)}$. That is, the ECU 71 is unable to calculate 45° CA rotation time $T45_{(4)}$. Thus, 180° CA rotation time T180 whose calculation is based on 45° CA rotation time T45 cannot also be calculated. Consequently, the detection of the engine revolution speed is disabled.

Accordingly, this embodiment is constituted such that an average revolution speed over a plurality of cycles is calculated on the basis of the pulse interval of the output pulses corresponding to a predetermined crank angle. This calculation is based on an experimental rule that at least one pulse is sure to be produced in one cycle.

Specifically, this embodiment is constituted such that 180° CA, instead of conventional 45° CA, is used as an interval between the pulses. It is required that the reference pulse be produced once every cycle (the reference pulse has an interval of 180° CA). As shown in Fig. 24, since the cut teeth part does not fail to be detected at a timing belonging to a high engine revolution speed period, the pulse appearing when the cut teeth part is detected is used as a reference pulse (this pulse corresponds to the NE interrupt count CNIRQ equal to 0).

In this embodiment, a difference between the time at which the previous pulse corresponding to CNIRQ = 0 is produced and the time at which the current pulse corresponding to CNIRQ = 0 is 180° CA rotation time T180.

With the above constitution, the missing teeth phenomenon is prevented from affecting the detection of the revolution speed because the missing teeth (missing pulses) occur between the reference pulses. In this way, an accurate detection of the average revolution speed over a plurality of cycles is achieved.

A description will now be given, with reference to the flowchart of Fig. 25, of the extremely low revolution speed detection process of the extremely low revolution speed detection device. The extremely low revolution speed detection device according to this embodiment has a hardware construction including the ECU 71 and the revolution sensor 35. That is, the extremely low revolution speed detection process described below is executed by the ECU 71.

The extremely low revolution speed detection process according to this embodiment is also executed as an NE interrupt process.

In step 1000, the current NE pulse interval $TNINT_i$ is calculated. The current NE pulse interval $TNINIT_i$ is calculated by subtracting the time $TNE_{i-1}$ at which the engine revolution pulse is output in the previous NE interrupt from the time $TNE_i$ at which the engine revolution pulse is output in the current NE interrupt.

Once the current NE pulse interval $TNINT_1$ is calculated in step 1000, a determination is made in step 1002 as to whether or not a value obtained by multiplying the current NE pulse interval $TNINT_i$ by a correction value (in this embodiment, (correction value) = 0.4375 < 1) is greater than the previous NE pulse interval $TNINT_{i-1}$ calculated in the NE interrupt.

The determination made in step 1002 is a process for detecting the missing teeth. That is, in step 1002, a determination of missing teeth is made if the value obtained by multiplying the current NE pulse interval $TNINT_i$ by the correction value (<1) is greater than the previous NE pulse interval $TNINT_{i-1}$.

If a positive answer is yielded in step 1002, i.e. if it is determined that the current input engine revolution pulses indicate the cut teeth part, the process proceeds to step 1004. The process in step 1004 is a process to determine whether or not the cut teeth part detection in step 1002 is a genuine detection. The process in step 1004 is the same process as the process in step 308.

If a positive answer is yielded in step 1004, that is, if the cut teeth part detection in step 1002 proves genuine, the process proceeds to step 1006.

In step 1006, the cut teeth part interval time T180 is calculated on the basis of the current genuine cut teeth part detection timing (the engine revolution pulse output time $TNE_i$) and on the basis of the previous genuine cut teeth part detection timing (TN0 stored at the previous NE interrupt in step 1008). Specifically, the cut teeth part interval T180 is obtained by subtracting the previous cut teeth part detection timing TN0 from the current cut teeth part detection timing $TNE_i$ ($T180 = TNE_i - TN0$).

As has been described, the genuine cut teeth part detection occurs in the high engine revolution speed period. Therefore, the pulse corresponding to the cut teeth part does not fail to be output at the timing CNIRQ = 0. For this reason, the cut teeth part detection interval time T180 is a value accurately reflecting the duration of one cycle.

Subsequently, in step 1008, the current genuine cut teeth part detection timing $TNE_i$ is stored in the RAM 83 as TN0 so that it is used in the next NE interrupt process.

Subsequently, in step 1010, the cut teeth part interval T180 calculated in step 1006 is substituted in the equation (5) so as to calculate the engine revolution speed (average revolution speed) NE. The thus calculated engine revolution speed NE is quite accurate because even if the missing teeth phenomenon occurs in the extremely low revolution speed period, the revolution speed detection is not unfavorably affected.

When the engine revolution speed is detected in step 1010, the process proceeds to step 1012, whereupon the current genuine cut teeth part detection timing $TNE_i$ is stored in the RAM 83 as $TNE_{i-1}$, and the current NE pulse interval $TNINT_i$ is stored in the RAM 83 as $TNINT_{i-1}$.

If a negative answer is yielded in step 1002, i.e. if it is determined that the cut teeth part is not detected, and, in addition, if it is determined in step 1004 that the cut teeth part detection is not genuine (in other words, there are missing teeth), it is not necessary to perform the engine revolution speed detection process in step 1006 and beyond. The process proceeds to step 1012, whereupon the $TNE_{i-1}$ and $TNINT_{i-1}$ are updated and the process is terminated.

If a fuel injection pump of an inner cam type capable of providing a higher pressure is employed instead of the fuel injection pump 1 of a cam face type which is used in the foregoing embodiments, it is necessary to effect the ON and OFF control of the electromagnetic spill valve 23 with a higher precision because the fuel pressure increases when the fuel injection pump of an inner cam type is employed.

The increase in the fuel pressure causes the amount of fuel injected from the fuel injection nozzle 4 per a unit time to increase, with the result that the amount of fuel injected deviates greatly from a predetermined calculated amount as a result of a slight deviation in the ON or OFF timing of the electromagnetic spill valve 23 from the predetermined point of time. Therefore, if the electromagnetic spill valve 23 is kept ON at the start of the engine, the fuel is supplied in great excess because of the high fuel pressure. Consequently, a serious problem is invited in that the smoke is produced and the cranking rotation speed is reduced.

The fuel injection amount control device of this application enables the fuel to be injected intermittently in accordance with the engine condition during the starting process. Hence, the present invention ensures that the fuel injection amount control is performed without any problem even if the fuel injection pump characterized by a high fuel pressure is employed.

## INDUSTRIAL APPLICABILITY

As has been described, according to the fuel injection control method of the present invention, it is possible to perform the fuel injection control during the engine starting process in an effective manner comparable to the manner in which the control is effected in a stable engine revolution condition. With the present invention, it is possible to restrain the production of the smoke, to reduce the exhaust emission and to prevent the cranking torque from being reduced.

## Claims

**1.** A fuel injection control method for an internal combustion engine, said fuel injection control method comprising:

revolution detection means constituted of a gear-like pulser rotated in synchronism with a fuel injection pump and of an electromagnetic pickup and generating pulses at intervals of a predetermined angle,
wherein an electromagnetic spill valve is closed at a point of time at which a reference signal produced as a result of a detection of a cut teeth part provided in said gear-like pulser is output or at a predetermined point of time following the reference signal,
and wherein the electromagnetic spill valve is opened on the basis of a fuel injection amount calculated in accordance with a running condition of the internal combustion engine and in accordance with the pulses generated by said revolution detection means,
said fuel injection control method comprising the steps of:

determining whether or not a current running condition is such that a piston is located at a top dead center in a cycle of the internal combustion engine where a revolution speed is extremely low and it is impossible to detect said pulses, that is, whether or not the running condition is in a detection disabled period; and
calculating, when the revolution speed is extremely low, a timing at which the electromagnetic spill valve is opened on the basis of the detected pulses produced near the detection disabled period.

**2.** The fuel injection control method for an internal combustion engine as claimed in claim 1, wherein, when the revolution speed is extremely low, the timing at which the electromagnetic spill valve is opened is updated at every input of the pulse.

**3.** The fuel injection control method for an internal combustion engine as claimed in claim 2, wherein there is provided missing pulse detection means for detecting missing pulses among the pulses generated by said revolution detection means,

and wherein an update of the timing at which the electromagnetic spill valve is opened is prohibited when missing pulses are detected by the missing pulse detection means.

**4.** The fuel injection control method for an internal combustion engine as claimed in claim 1, said fuel injection control method further comprising the steps of:

determining whether or not the detection of the cut teeth part is a genuine detection;
closing, after the detection, the electromagnetic spill valve at a predetermined timing calculated on the basis of the engine condition, when said detection is a genuine detection of the cut teeth part; and
opening, when said detection is not a genuine detection of the cut teeth part, the electromagnetic spill valve at a predetermined timing following said detection.

**5.** The fuel injection control method for an internal combustion engine as claimed in claim 1,
wherein the timing at which the electromagnetic spill valve is opened is made to vary in accordance with a variation in the revolution speed of the internal combustion engine.

**6.** The fuel injection control method for an internal combustion engine as claimed in claim 1,

wherein a variation in an interval between the pulses is detected before a detection of the reference signal, and wherein a rotational angle is estimated from the variation in the interval between the pulses so that the electromagnetic spill valve is controlled to be opened or closed accordingly.

**7.** The fuel injection control method for an internal combustion engine as claimed in claim 1,

wherein an engine temperature is detected before the detection of the reference signal,

an uninterrupted injection is performed if the engine temperature is below a predetermined level, and
a fuel injection is prohibited if the engine temperature is beyond the predetermined level.

**8.** The fuel injection control method, for an internal combustion engine, as claimed in claim 1, wherein said revolution detecting means detects an extremely low revolution speed with

a pulse generating means capable of generating at least one pulse in every cycle; and
an average revolution speed calculating means for calculating an average revolution speed over a plurality of cycles on the basis of the interval between the pulses generated by the pulse generating means and on the basis of a predetermined cycle-to-cycle crank angle.

## Patentansprüche

**1.** Kraftstoffeinspritzregelverfahren für eine Brennkraftmaschine, wobei das Kraftstoffeinspritzregelverfahren folgendes aufweist:

eine Umdrehungserfassungseinrichtung, die gebildet ist durch eine radartige Impulseinrichtung, die gleichzeitig mit einer Kraftstoffeinspritzpumpe gedreht wird, und eine elektromagnetische Aufnahme und Impulse bei Intervallen eines vorgegebenen Winkels erzeugt,
wobei ein elektromagnetisches Überlaufventil bei einem Zeitpunkt geschlossen wird, bei dem ein Referenzsignal, das als ein Erfassungsergebnis eines Ausschnittzahnteils erzeugt wird, der in der radartigen Impulseinrichtung vorgesehen ist, abgegeben wird oder bei einem vorgegebenen Zeitpunkt nach dem Referenzsignal,
und wobei das elektromagnetische Überlaufventil geöffnet wird auf der Grundlage einer Kraftstoffeinspritzmenge, die in Übereinstimmung mit einem Betriebszustand der Brennkraftmaschine berechnet wird und in Übereinstimmung mit den Impulsen, die durch die Umdrehungserfassungseinrichtung erzeugt werden,
wobei das Kraftstoffeinspritzregelverfahren folgende Schritte aufweist:

Ermitteln, ob ein momentaner Betriebszustand ein derartiger ist oder nicht, dass ein Kolben sich bei einem oberen Totpunkt bei einem Zyklus der Brennkraftmaschine befindet, wobei eine Drehzahl äußerst niedrig ist und es ist unmöglich ist, die Impulse zu erfassen, d. h., ob der Betriebszustand sich bei einer Erfassungshemmperiode befindet oder nicht; und
Berechnen, wenn die Drehzahl äußerst niedrig ist, eines Zeitpunkts, bei dem das elektromagnetische Überlaufventil geöffnet wird auf der Grundlage der erfassten Impulse, die nahe der Erfassungshemmperiode erzeugt werden.

**2.** Kraftstoffeinspritzregelverfahren für eine Brennkraftmaschine nach Anspruch 1, wobei, wenn die Drehzahl äußerst niedrig ist, der Zeitpunkt, bei dem das elektromagnetische Überlaufventil geöffnet wird, bei jeder Eingabe des Impulses erneuert wird.

**3.** Kraftstoffeinspritzregelverfahren für eine Brennkraftmaschine nach Anspruch 2, wobei eine Fehlimpulserfassungseinrichtung vorgesehen ist zum Erfassen fehlender Impulse aus den Impulsen, die durch die Drehzahlerfassungseinrichtung erzeugt werden,

und wobei eine Erneuerung des Zeitpunkts, bei dem das elektromagnetische Überlaufventil geöffnet wird, verboten wird, wenn fehlende Impulse erfasst werden durch die Fehlimpulserfassungseinrichtung.

**4.** Kraftstoffeinspritzregelverfahren für eine Brennkraftmaschine nach Anspruch 1, wobei das Kraftstoffeinspritzregelverfahren des weiteren folgende Schritte aufweist:

Ermitteln, ob die Erfassung des Ausschnittzahnteils eine richtige Erfassung ist oder nicht;
nach der Erfassung Schließen des elektromagnetischen Überlaufventils bei einem vorgegebenen Zeitpunkt, der berechnet wird auf der Grundlage des Motorzustands, wenn die Erfassung eine richtige Erfassung des Ausschnittzahnteils ist;
und Öffnen, wenn die Erfassung nicht eine richtige Erfassung des Ausschnittszahnteils ist, des elektromagnetischen Überlaufventils bei einem vorgegebenen Zeitpunkt nach der Erfassung.

5. Kraftstoffeinspritzregelverfahren für eine Brennkraftmaschine nach Anspruch 1, wobei der Zeitpunkt, bei dem das elektromagnetische Überlaufventil geöffnet wird, variabel eingerichtet ist in Übereinstimmung mit einer Änderung der Drehzahl der Brennkraftmaschine.

6. Kraftstoffeinspritzregelverfahren für eine Brennkraftmaschine nach Anspruch 1, wobei eine Änderung eines Intervalls zwischen den Impulsen erfasst wird vor einer Erfassung des Referenzsignals,

   und wobei ein Drehwinkel geschätzt wird aus der Änderung des Intervalls zwischen den Impulsen, so dass das elektromagnetische Überlaufventil gesteuert wird, um demgemäss geöffnet oder geschlossen zu werden.

7. Kraftstoffeinspritzregelverfahren für eine Brennkraftmaschine nach Anspruch 1,

   wobei eine Motortemperatur vor der Erfassung des Referenzsignals erfasst wird,
   wobei eine ununterbrochene Einspritzung durchgeführt wird, wenn die Motortemperatur sich unterhalb einer vorgegebenen Höhe befindet,
   und eine Kraftstoffeinspritzung verboten wird, wenn die Motortemperatur über einer vorgegebenen Höhe liegt.

8. Kraftstoffeinspritzregelverfahren für eine Brennkraftmaschine nach Anspruch 1, wobei die Drehzahlerfassungseinrichtung eine äußerst niedrige Drehzahl erfasst mit:

   einer Impulserzeugungseinrichtung, die zumindest einen Impuls bei jedem Zyklus erzeugen kann;
   und einer Durchschnittsdrehzahlberechnungseinrichtung zum Berechnen einer Durchschnittsdrehzahl über eine Vielzahl von Zyklen auf der Grundlage des Intervalls zwischen den Impulsen, die erzeugt werden durch die Impulserzeugungseinrichtung, und auf der Grundlage eines vogegebenen Zyklus-zu-Zyklus Kurbelwinkels.

**Revendications**

1. Un procédé de commande d'injection de carburant pour un moteur à combustion interne, ledit procédé de commande d'injection de carburant comprenant :

   des moyens de détection de rotation constitués d'un organe servant à produire des impulsions, analogue à une roue dentée, fonctionnant en synchronisme avec une pompe à injection de carburant et d'un capteur électromagnétique et générant des impulsions à des intervalles correspondant à un angle prédéterminé,
   dans lequel une soupape de décharge électromagnétique est fermée à un moment auquel un signal de référence, produit en résultat d'une détection d'une partie de dent taillée, appartenant audit organe de génération d'impulsions analogue à une roue dentée, est fourni ou bien à un moment prédéterminé subséquent au signal de référence,
   et dans lequel la soupape de décharge électromagnétique est ouverte sur la base d'une quantité d'injection, calculée selon un état de fonctionnement du moteur à combustion interne, et selon les impulsions générées par lesdits moyens de détection de rotation,
   ledit procédé de commande d'injection de carburant comprenant les étapes consistant à :

      déterminer si un état de fonctionnement actuel est ou non tel qu'un piston est placé au point mort haut dans un cycle du moteur à combustion interne, dans lequel la vitesse de rotation est extrêmement basse et où il est impossible de détecter lesdites impulsions, c'est-à-dire si l'état de fonctionnement se trouve ou non dans une période à invalidation de la détection ; et
      calculer, lorsque la vitesse est extrêmement basse, un cadencement auquel la soupape de décharge électromagnétique est ouverte, sur la base des impulsions détectées, produites à proximité de la période d'invalidation de détection.

2. Le procédé de commande d'injection pour un moteur à combustion interne selon la revendication 1, dans lequel, lorsque la vitesse de rotation est extrêmement basse, le cadencement auquel la soupape de décharge électromagnétique est ouverte est mis à jour à chaque entrée d'impulsion.

3. Le procédé de commande d'injection pour un moteur à combustion interne selon la revendication 2, dans lequel il est prévu et généré des moyens de détection d'impulsions manquantes ou ratées, devant détecter les impulsions manquantes ou ratées parmi les impulsions générées par lesdits moyens de détection,

et dans lequel une mise à jour du cadencement, auquel la soupape de décharge électromagnétique est ouverte, est empêchée, lorsque des impulsions manquantes ou ratées sont détectées par les moyens de détection d'impulsion manquantes ou ratées.

**4.** Le procédé de commande d'injection pour un moteur à combustion interne selon la revendication 1, ledit procédé de commande d'injection de carburant comprenant en outre les étapes consistant à :

déterminer si la détection de la partie de dent taillée est ou non une détection authentique ;
fermer, après la détection, la soupape de décharge électromagnétique avec un calage prédéterminé calculé sur la base de l'état du moteur à combustion, lorsque ladite détection est une détection authentique de la partie de dent taillée ; et
ouvrir, lorsque ladite détection n'est pas une détection authentique de la partie de dent taillée, la soupape de décharge électromagnétique, avec un calage prédéterminé, subséquent à ladite détection.

**5.** Le procédé de commande d'injection pour un moteur à combustion interne selon la revendication 1,
dans lequel le calage avec lequel la soupape de décharge électromagnétique est ouverte est amené à varier selon la variation de la vitesse de rotation du moteur à combustion interne.

**6.** Le procédé de commande d'injection pour un moteur à combustion interne selon la revendication 1,

dans lequel la variation, faite dans un intervalle entre les impulsions, est détectée avant de procéder à la détection du signal de référence,
et dans lequel un angle de rotation est estimé d'après la variation d'un intervalle entre les impulsions, de manière que la soupape de décharge électromagnétique soit commandée pour être ouverte ou fermée de manière correspondante.

**7.** Le procédé de commande d'injection pour un moteur à combustion interne selon la revendication 1,

dans lequel la température du moteur à combustion interne est détectée avant de procéder à la détection du signal de référence,
une injection non interrompue est effectuée si la température du moteur à combustion est inférieure à un niveau prédéterminé, et
l'injection de carburant est empêchée si la température du moteur à combustion est au-delà du niveau prédéterminé.

**8.** Le procédé de commande d'injection pour un moteur à combustion interne selon la revendication 1,

dans lequel lesdits moyens de détection de rotation détectent une vitesse de rotation extrêmement basse avec des moyens de génération d'impulsions susceptibles de générer au moins une impulsion à chaque cycle ; et des moyens de calcul de vitesse de rotation moyenne, pour calculer une vitesse de rotation moyenne sur une pluralité de cycles, en se basant sur l'intervalle entre les impulsions générées par les moyens de génération d'impulsions et sur la base d'un angle de vilebrequin prédéterminé d'un cycle à un autre.

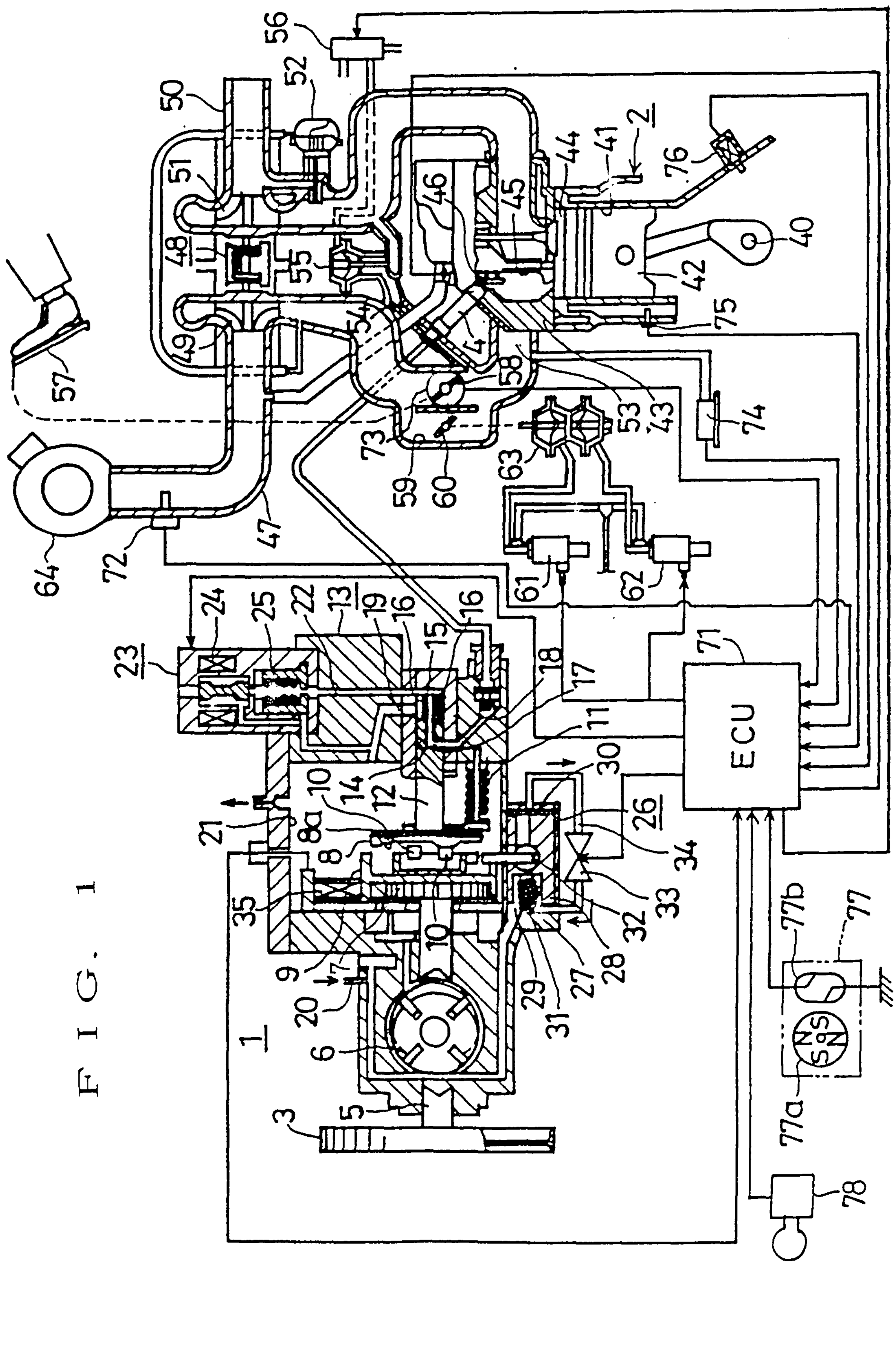


FIG. 1

FIG. 2

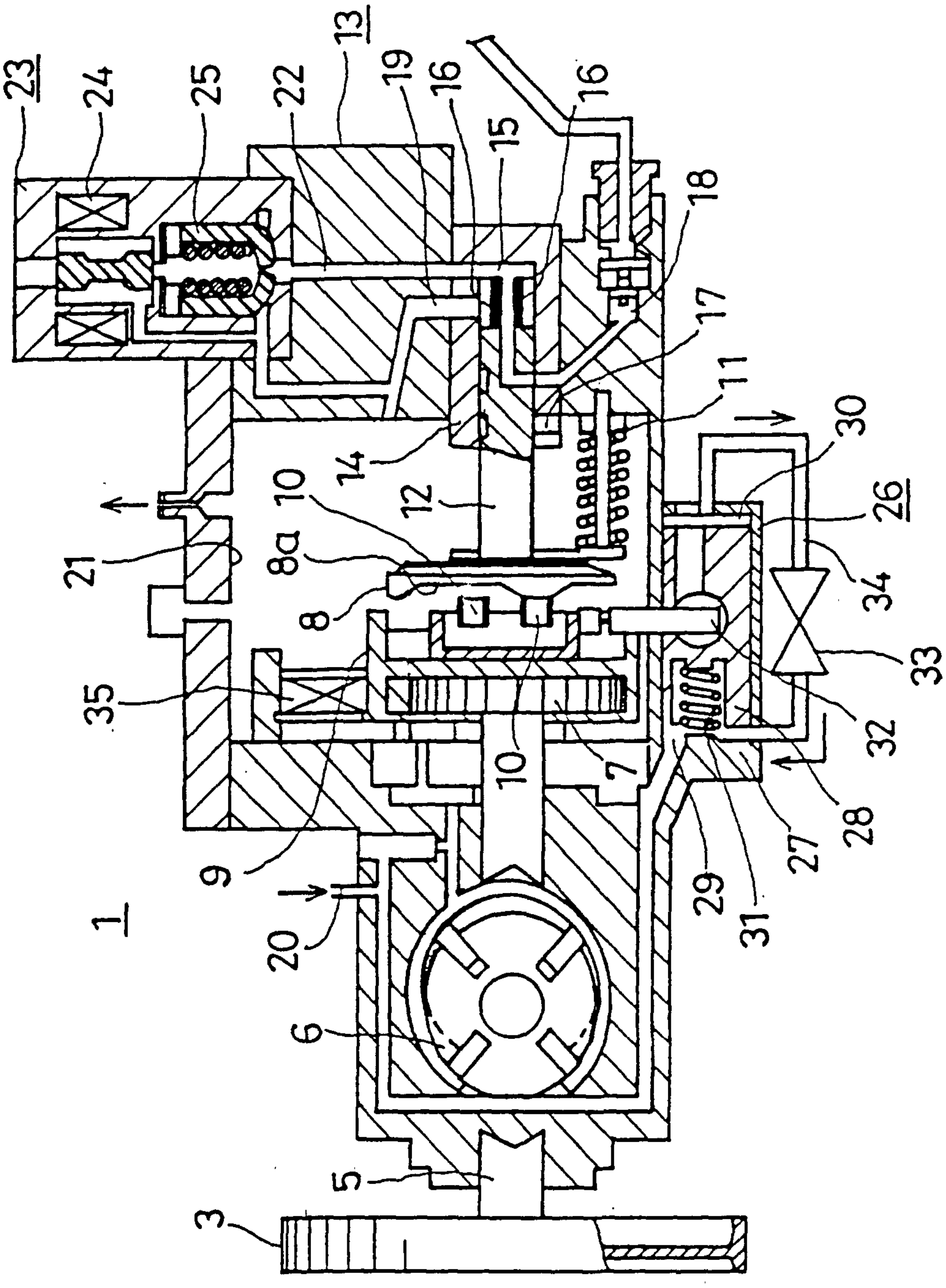
1
3
5
6
7
8
8a
9
10
11
12
13
14
15
16
17
18
19
20
21
22
23
24
25
26
27
28
29
30
31
32
33
34
35

FIG. 3

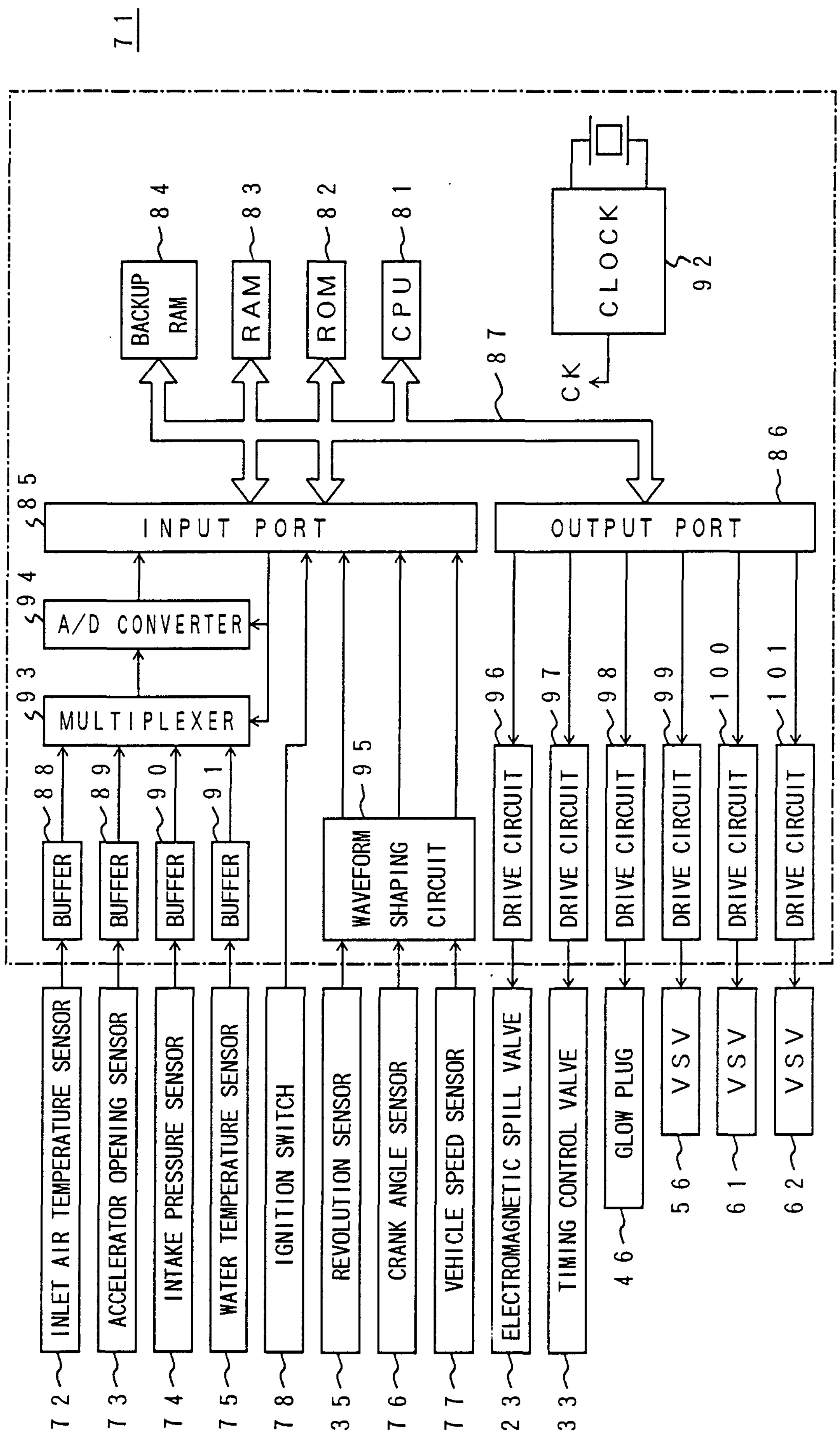
71
INLET AIR TEMPERATURE SENSOR
ACCELERATOR OPENING SENSOR
INTAKE PRESSURE SENSOR
WATER TEMPERATURE SENSOR
IGNITION SWITCH
REVOLUTION SENSOR
CRANK ANGLE SENSOR
VEHICLE SPEED SENSOR
ELECTROMAGNETIC SPILL VALVE
TIMING CONTROL VALVE
GLOW PLUG
VSV
VSV
VSV
72
73
74
75
78
35
76
77
23
33
46
56
61
62
BUFFER
BUFFER
BUFFER
BUFFER
88
89
90
91
WAVEFORM SHAPING CIRCUIT
95
MULTIPLEXER
93
A/D CONVERTER
94
INPUT PORT
85
OUTPUT PORT
86
DRIVE CIRCUIT
DRIVE CIRCUIT
DRIVE CIRCUIT
DRIVE CIRCUIT
DRIVE CIRCUIT
DRIVE CIRCUIT
96
97
98
99
100
101
BACKUP RAM
84
RAM
83
ROM
82
CPU
81
87
CLOCK
92
CK

F I G. 4

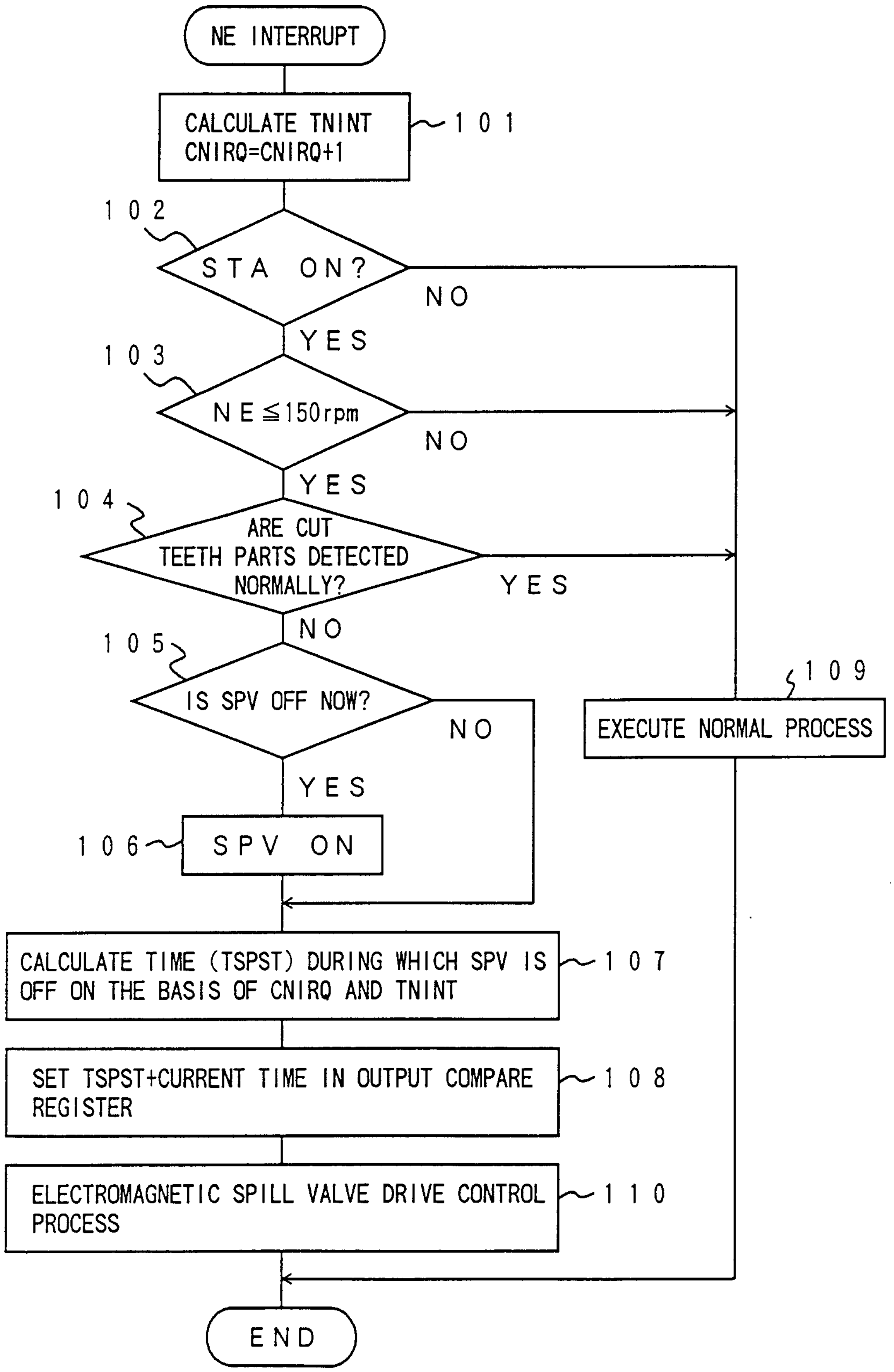
NE INTERRUPT
CALCULATE TNINT
CNIRQ=CNIRQ+1
101
102
STA ON?
NO
YES
103
NE≦150rpm
NO
YES
104
ARE CUT TEETH PARTS DETECTED NORMALLY?
YES
NO
105
IS SPV OFF NOW?
NO
YES
106
SPV ON
109
EXECUTE NORMAL PROCESS
CALCULATE TIME (TSPST) DURING WHICH SPV IS OFF ON THE BASIS OF CNIRQ AND TNINT
107
SET TSPST+CURRENT TIME IN OUTPUT COMPARE REGISTER
108
ELECTROMAGNETIC SPILL VALVE DRIVE CONTROL PROCESS
110
END

FIG. 5

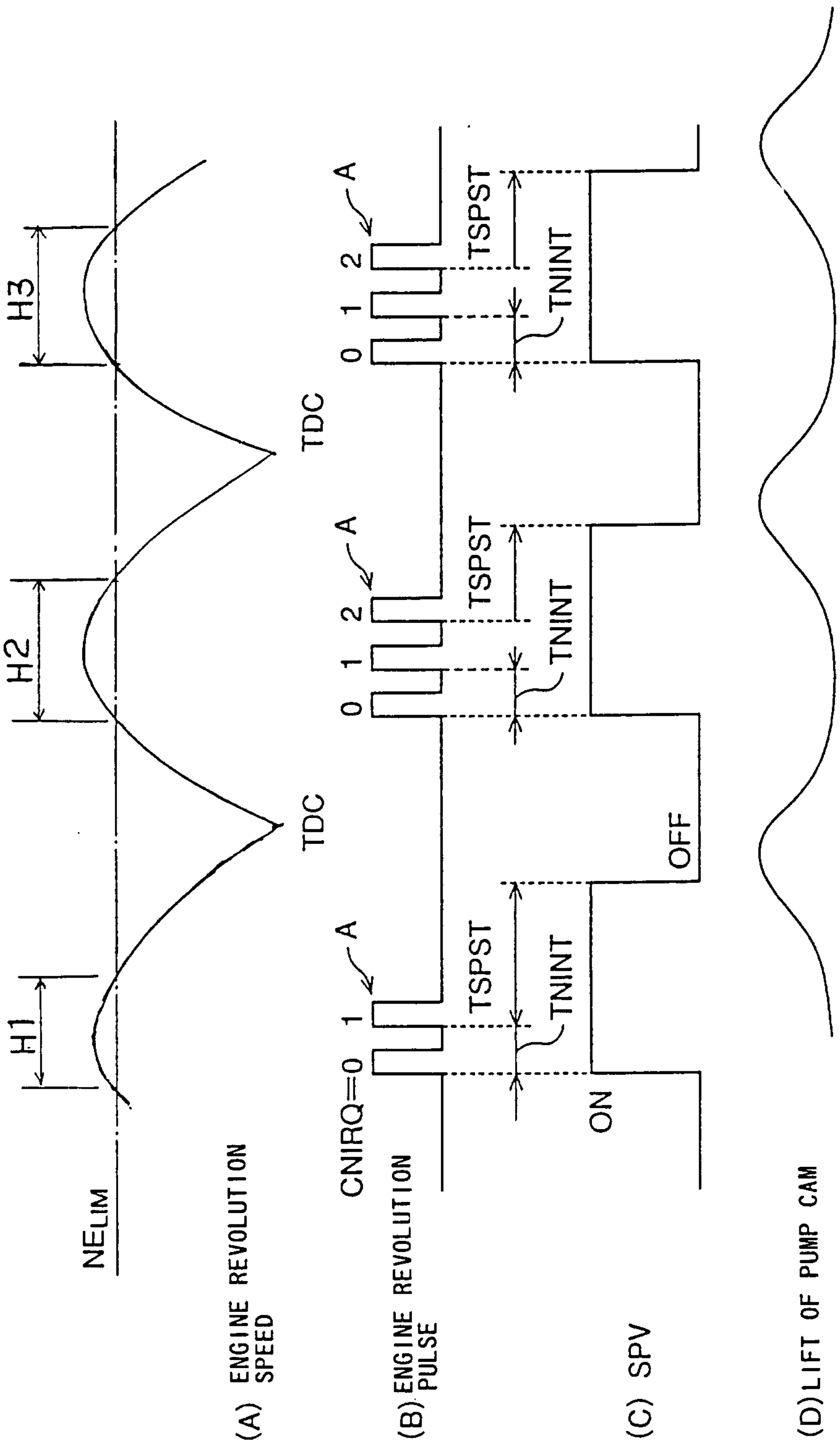
(A) ENGINE REVOLUTION SPEED
$NE_{LIM}$
H1
H2
H3
TDC
TDC
(B) ENGINE REVOLUTION PULSE
CNIRQ=0
1
0
1
2
0
1
2
A
A
A
TSPST
TNINT
TSPST
TNINT
TSPST
TNINT
(C) SPV
ON
OFF
(D) LIFT OF PUMP CAM

FIG. 6

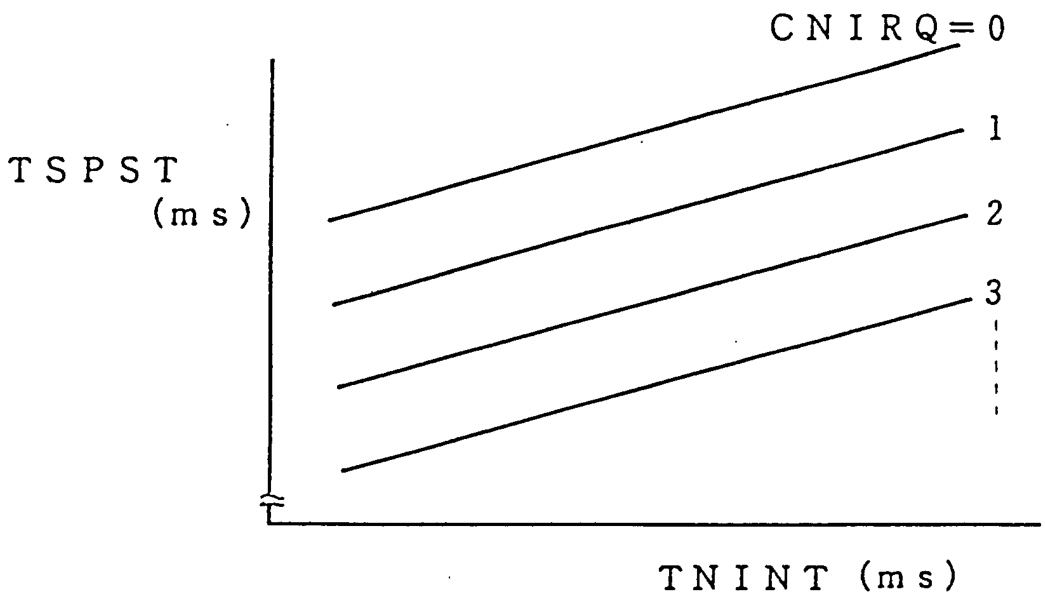

FIG. 7

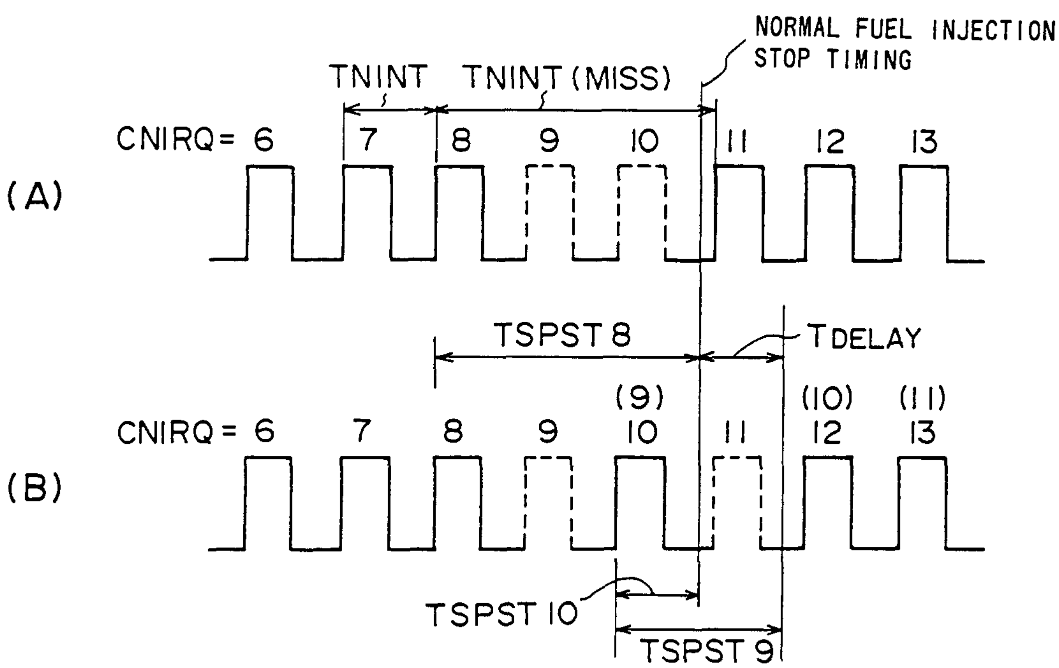
NORMAL FUEL INJECTION STOP TIMING
TNINT
TNINT (MISS)
CNIRQ= 6
7
8
9
10
11
12
13
(A)
TSPST 8
TDELAY
(9)
(10)
(11)
CNIRQ= 6
7
8
9
10
11
12
13
(B)
TSPST 10
TSPST 9

# FIG. 8

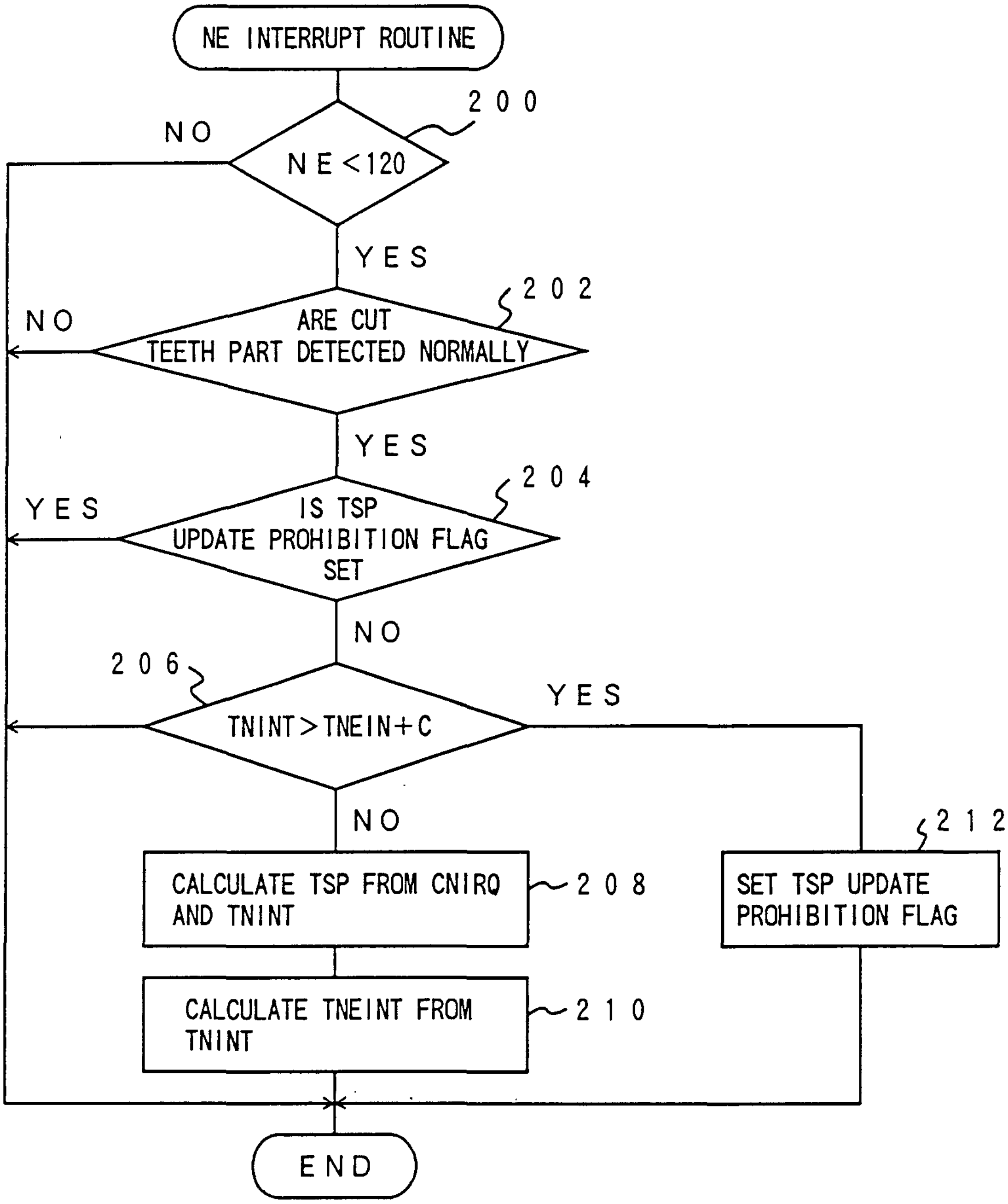
NE INTERRUPT ROUTINE
200
NO
NE<120
YES
202
NO
ARE CUT TEETH PART DETECTED NORMALLY
YES
204
YES
IS TSP UPDATE PROHIBITION FLAG SET
NO
206
YES
TNINT>TNEIN+C
NO
212
CALCULATE TSP FROM CNIRQ AND TNINT
208
SET TSP UPDATE PROHIBITION FLAG
CALCULATE TNEINT FROM TNINT
210
END

FIG. 9

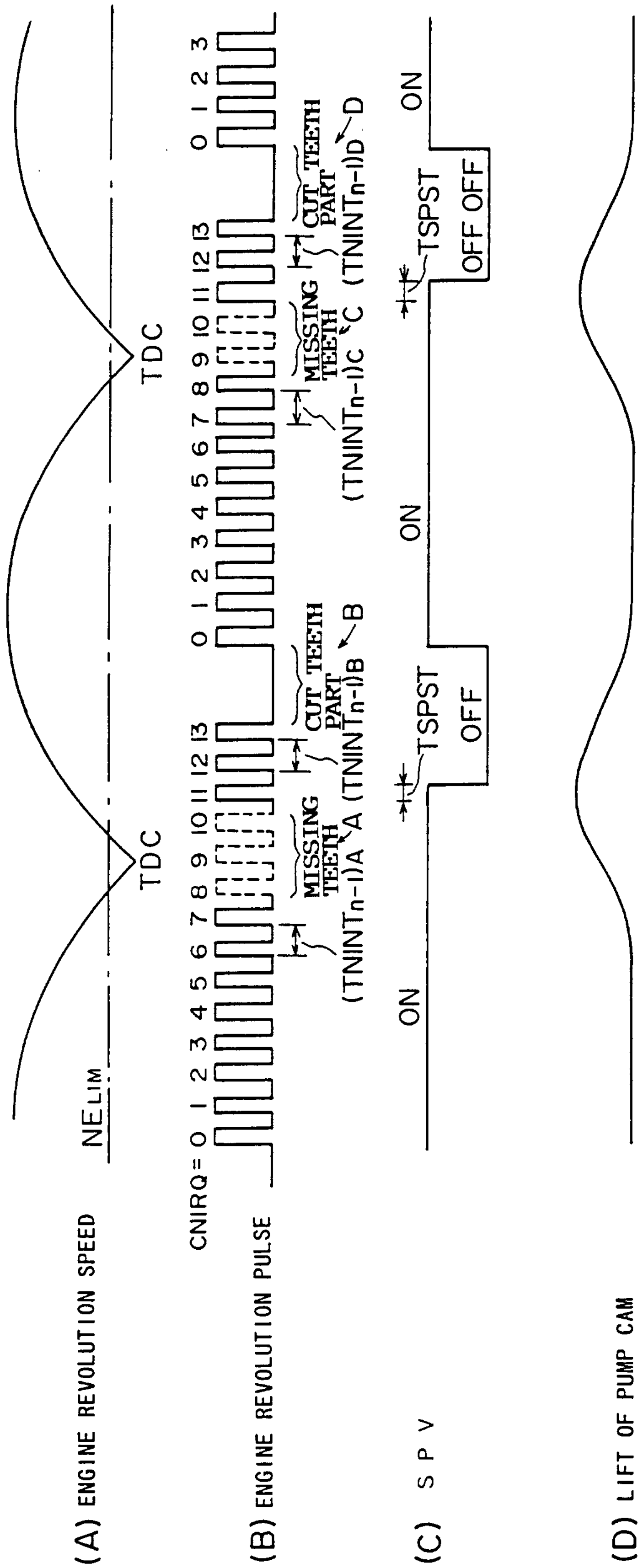
(A) ENGINE REVOLUTION SPEED
$NE_{LIM}$
TDC
TDC
(B) ENGINE REVOLUTION PULSE
CNIRQ= 0 1 2 3 4 5 6 7 8 9 10 11 12 13 0 1 2 3 4 5 6 7 8 9 10 11 12 13 0 1 2 3
MISSING TEETH
CUT TEETH PART
MISSING TEETH
CUT TEETH PART
(TNINTn-1)A A (TNINTn-1)B B
(TNINTn-1)C C (TNINTn-1)D D
(C) SPV
ON
TSPST
OFF
ON
TSPST
OFF OFF
ON
(D) LIFT OF PUMP CAM

# FIG. 10

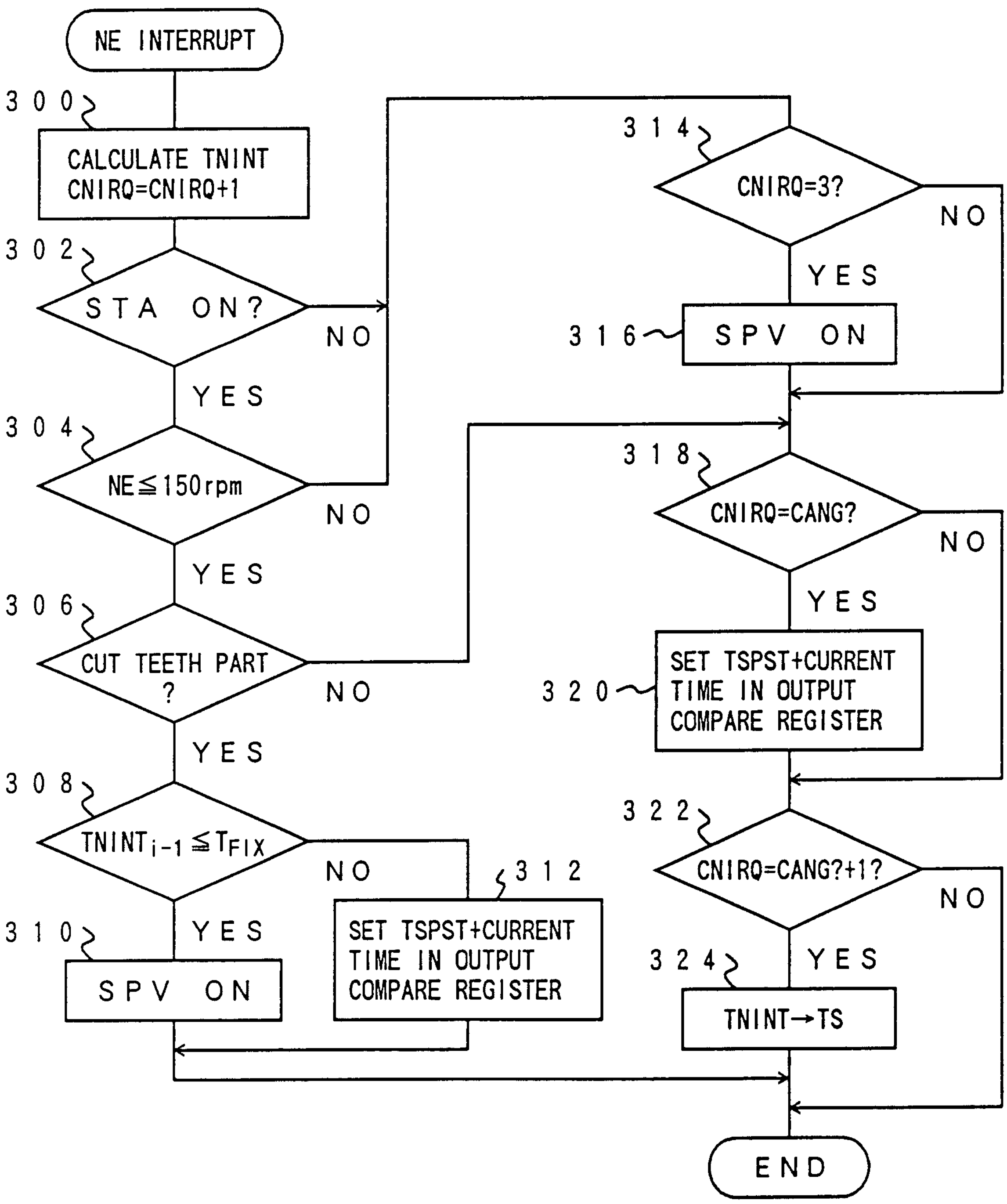

NE INTERRUPT
300
CALCULATE TNINT
CNIRQ=CNIRQ+1
302
STA ON?
NO
YES
304
NE≦150rpm
NO
YES
306
CUT TEETH PART ?
NO
YES
308
TNINT$_{i-1}$≦T$_{FIX}$
NO
YES
310
SPV ON
312
SET TSPST+CURRENT TIME IN OUTPUT COMPARE REGISTER
314
CNIRQ=3?
NO
YES
316
SPV ON
318
CNIRQ=CANG?
NO
YES
320
SET TSPST+CURRENT TIME IN OUTPUT COMPARE REGISTER
322
CNIRQ=CANG?+1?
NO
YES
324
TNINT→TS
END

FIG. 11

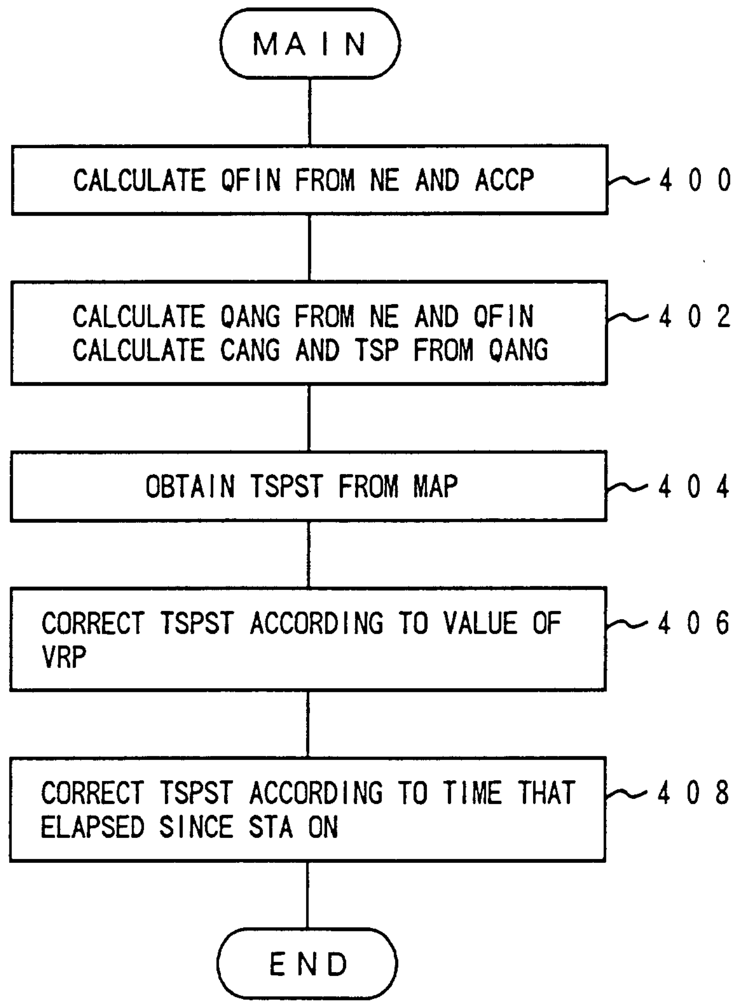
MAIN
CALCULATE QFIN FROM NE AND ACCP
400
CALCULATE QANG FROM NE AND QFIN
CALCULATE CANG AND TSP FROM QANG
402
OBTAIN TSPST FROM MAP
404
CORRECT TSPST ACCORDING TO VALUE OF VRP
406
CORRECT TSPST ACCORDING TO TIME THAT ELAPSED SINCE STA ON
408
END

F I G. 1 2

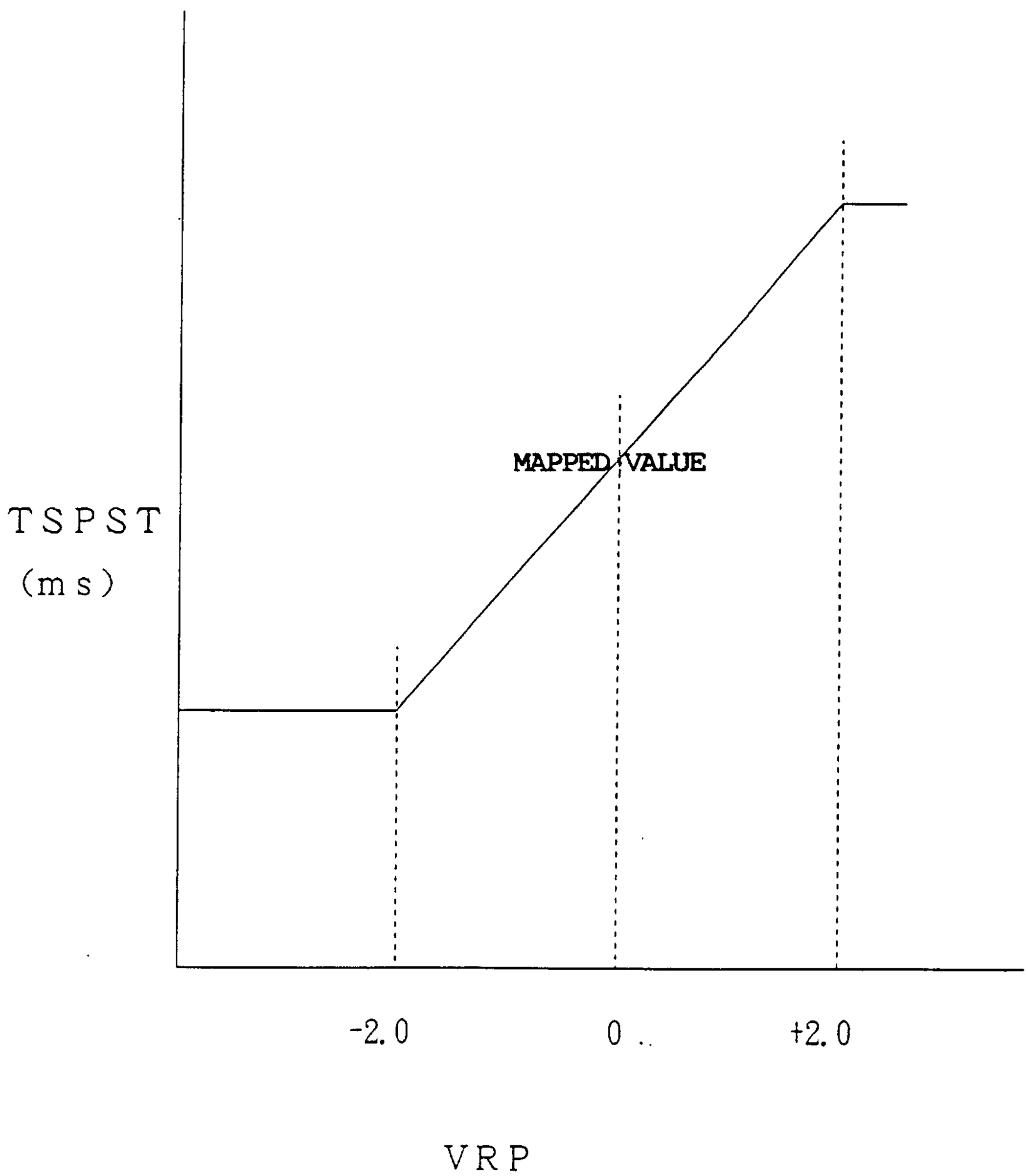

FIG. 13

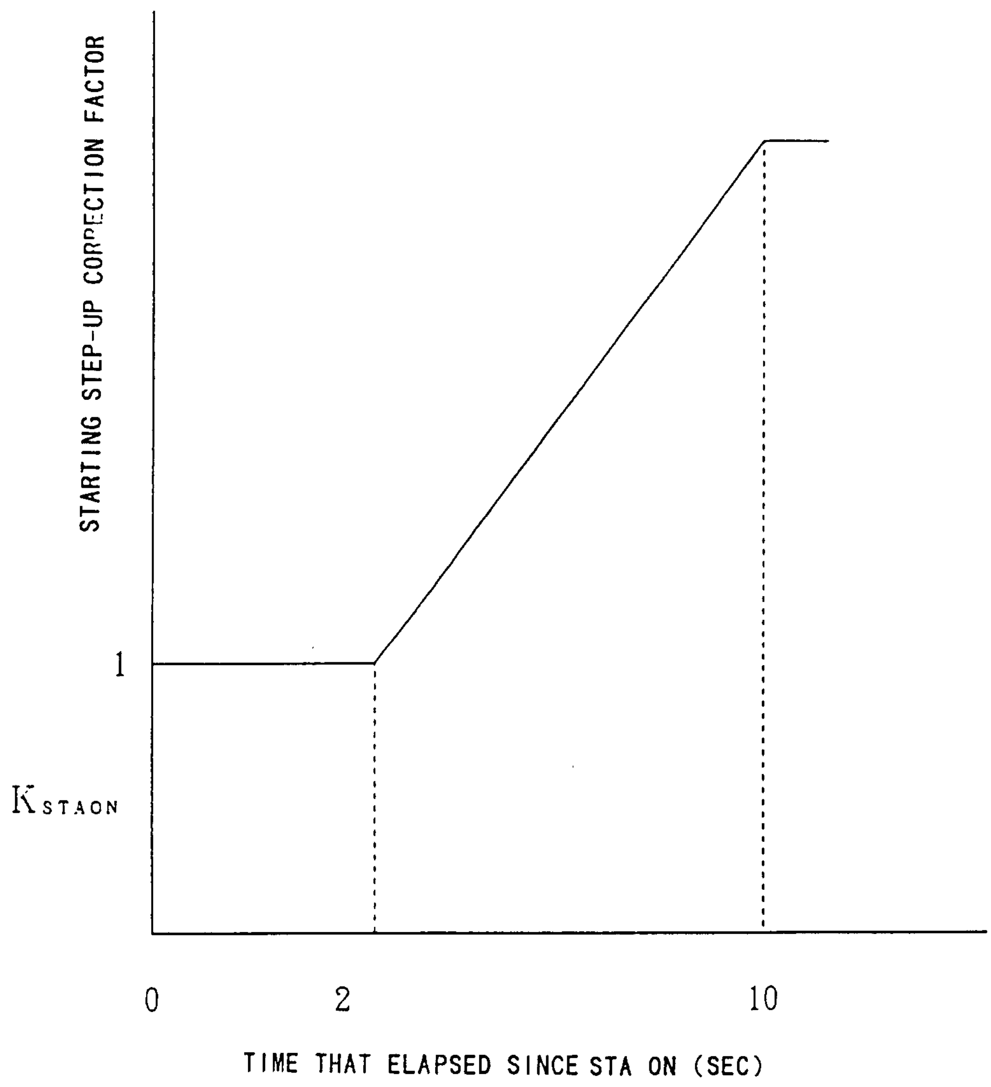
STARTING STEP-UP CORRECTION FACTOR
1
KSTAON
0
2
10
TIME THAT ELAPSED SINCE STA ON (SEC)

FIG. 14

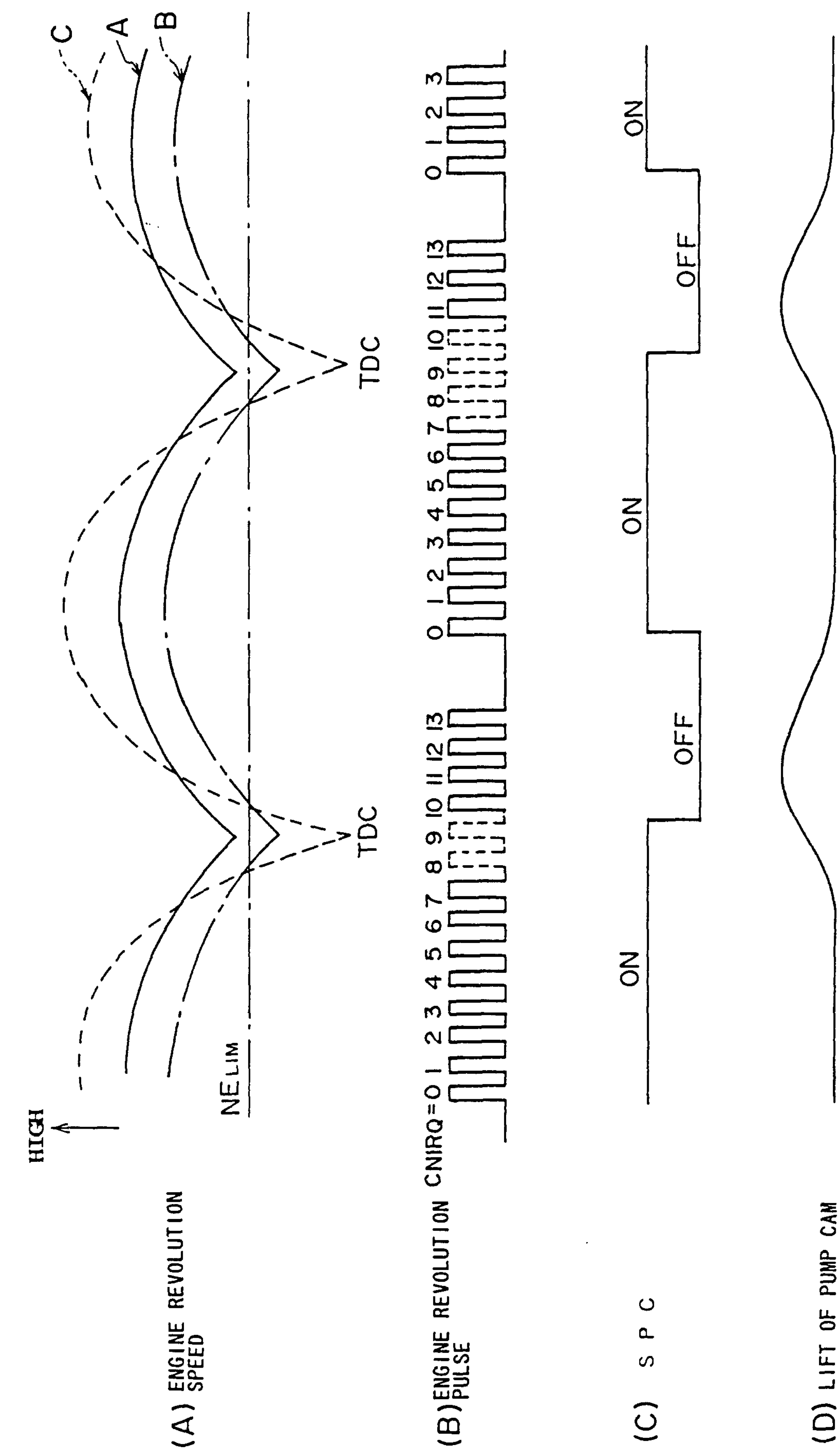

(A) ENGINE REVOLUTION SPEED
HIGH
C
A
B
NE LIM
TDC
TDC
(B) ENGINE REVOLUTION PULSE
CNIRQ=0 1 2 3 4 5 6 7 8 9 10 11 12 13 0 1 2 3 4 5 6 7 8 9 10 11 12 13 0 1 2 3
(C) SPC
ON
OFF
ON
OFF
ON
(D) LIFT OF PUMP CAM

FIG. 15

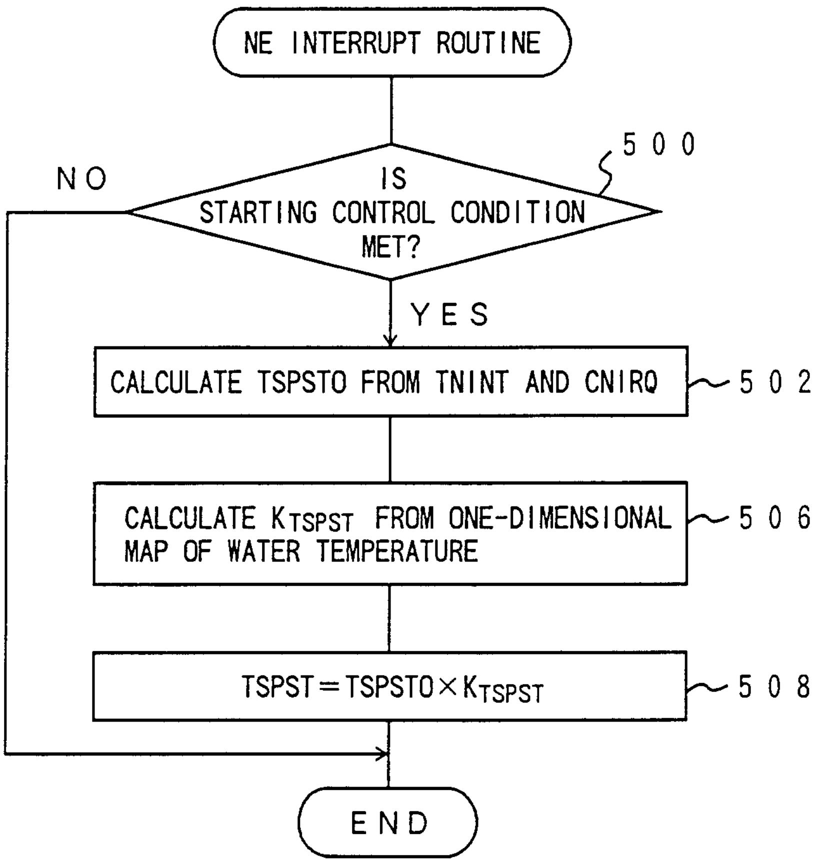
NE INTERRUPT ROUTINE
500
NO
IS STARTING CONTROL CONDITION MET?
YES
CALCULATE TSPSTO FROM TNINT AND CNIRQ
502
CALCULATE KTSPST FROM ONE-DIMENSIONAL MAP OF WATER TEMPERATURE
506
TSPST = TSPSTO × KTSPST
508
END

FIG. 16

| WATER TEMPERATURE | −20 | 0 | 20 | 40 |
|---|---|---|---|---|
| $K_{TSPST}$ | 1 | 1.1 | 1.3 | 1.6 |

FIG. 17

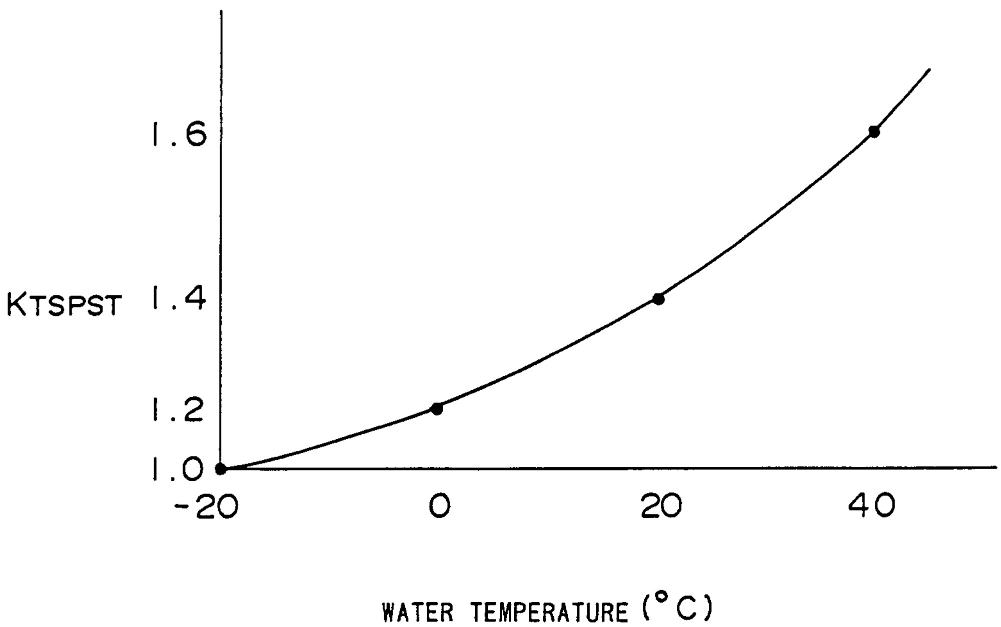

# FIG. 18

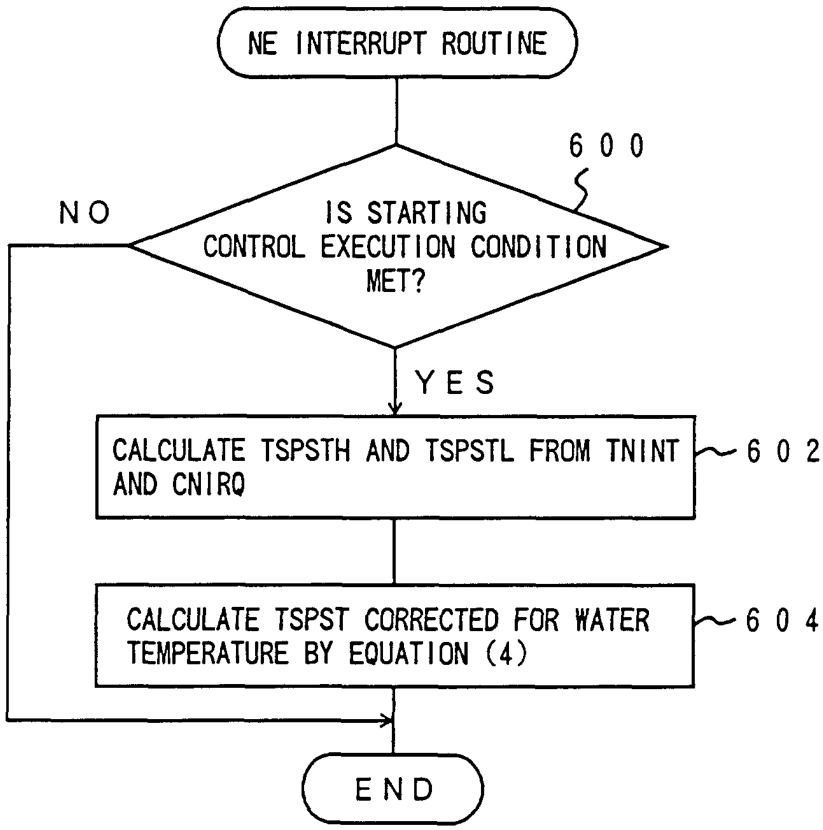


$$TSPST = [(TSPSTH-TSPSTL) \times \{THW-(20)\} \div \{40-(-20)\} + TSPSTL \cdots (4)$$

FIG. 19

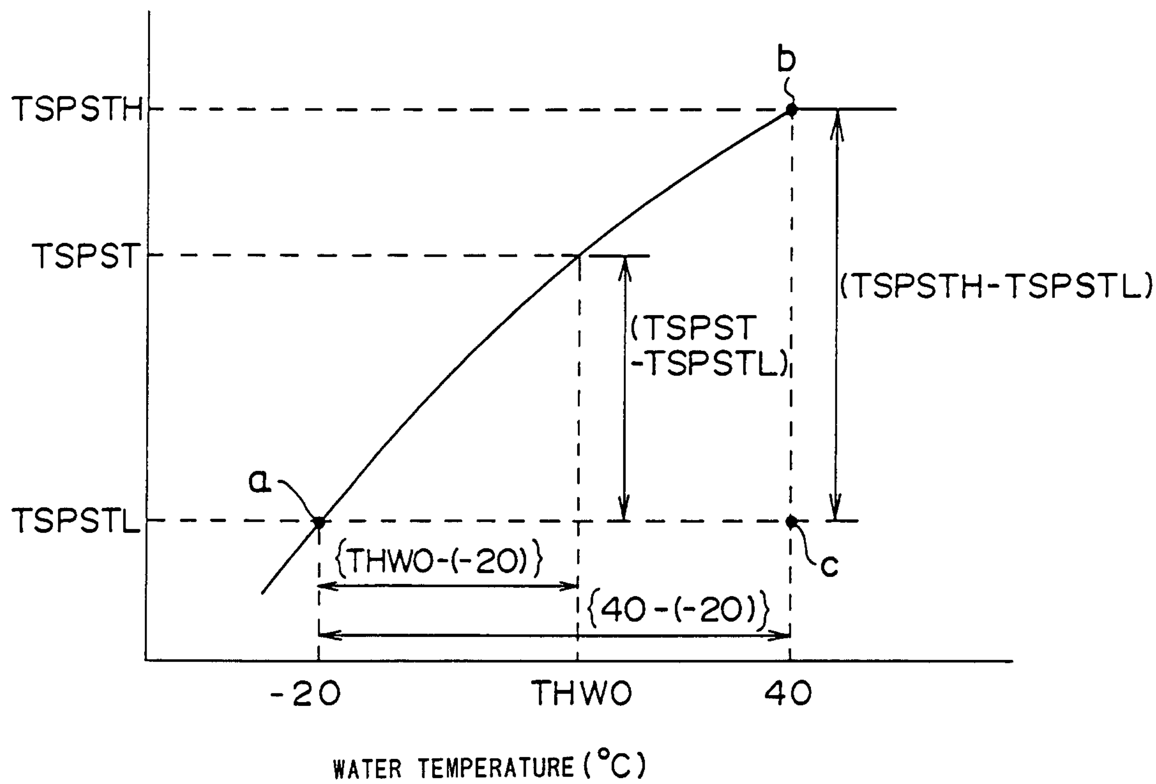
TSPSTH
TSPST
TSPSTL
a
b
c
(TSPSTH-TSPSTL)
(TSPST
-TSPSTL)
{THWO-(-20)}
{40-(-20)}
-20
THWO
40
WATER TEMPERATURE (°C)

FIG. 20

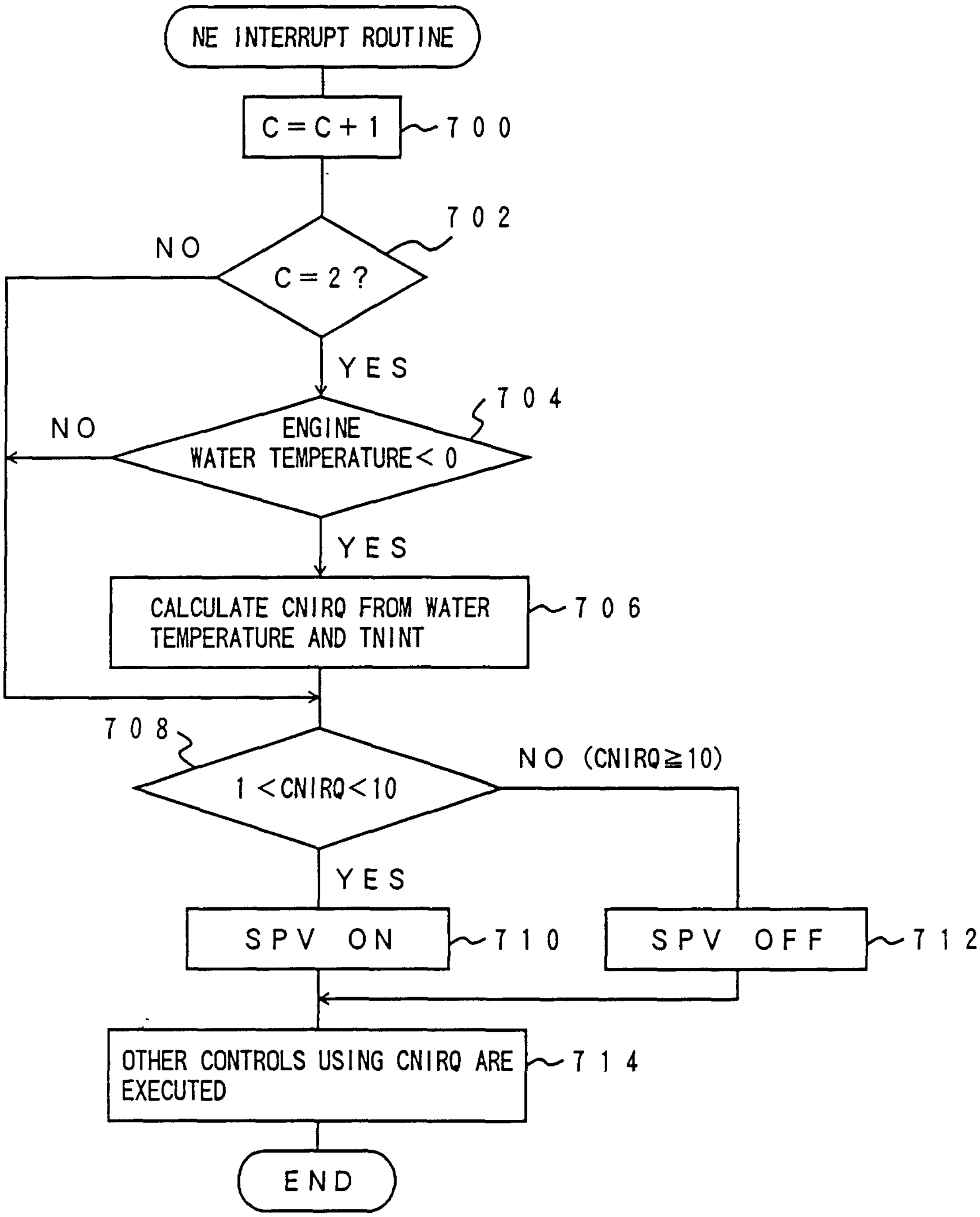
NE INTERRUPT ROUTINE
C=C+1
700
702
NO
C=2?
YES
704
NO
ENGINE WATER TEMPERATURE<0
YES
CALCULATE CNIRQ FROM WATER TEMPERATURE AND TNINT
706
708
1<CNIRQ<10
NO (CNIRQ≧10)
YES
SPV ON
710
SPV OFF
712
OTHER CONTROLS USING CNIRQ ARE EXECUTED
714
END

# F I G. 2 1

ENGINE WATER TEMPERATURE (℃)

| TNINT | | | | |
|---|---|---|---|---|
| SMALL ↑ | −30 | −20 | −10 | 0 |
| | 9 | 9 | 9 | 9 |
| | 10 | 9 | 9 | 9 |
| | 11 | 10 | 9 | 9 |
| | 12 | 11 | 10 | 9 |
| | ⋮ | ⋮ | ⋮ | ⋮ |
| | 8 | 7 | 6 | 5 |
| | 8 | 8 | 7 | 6 |
| | 8 | 8 | 8 | 7 |
| ↓ LARGE | 8 | 8 | 8 | 8 |

FIG. 22

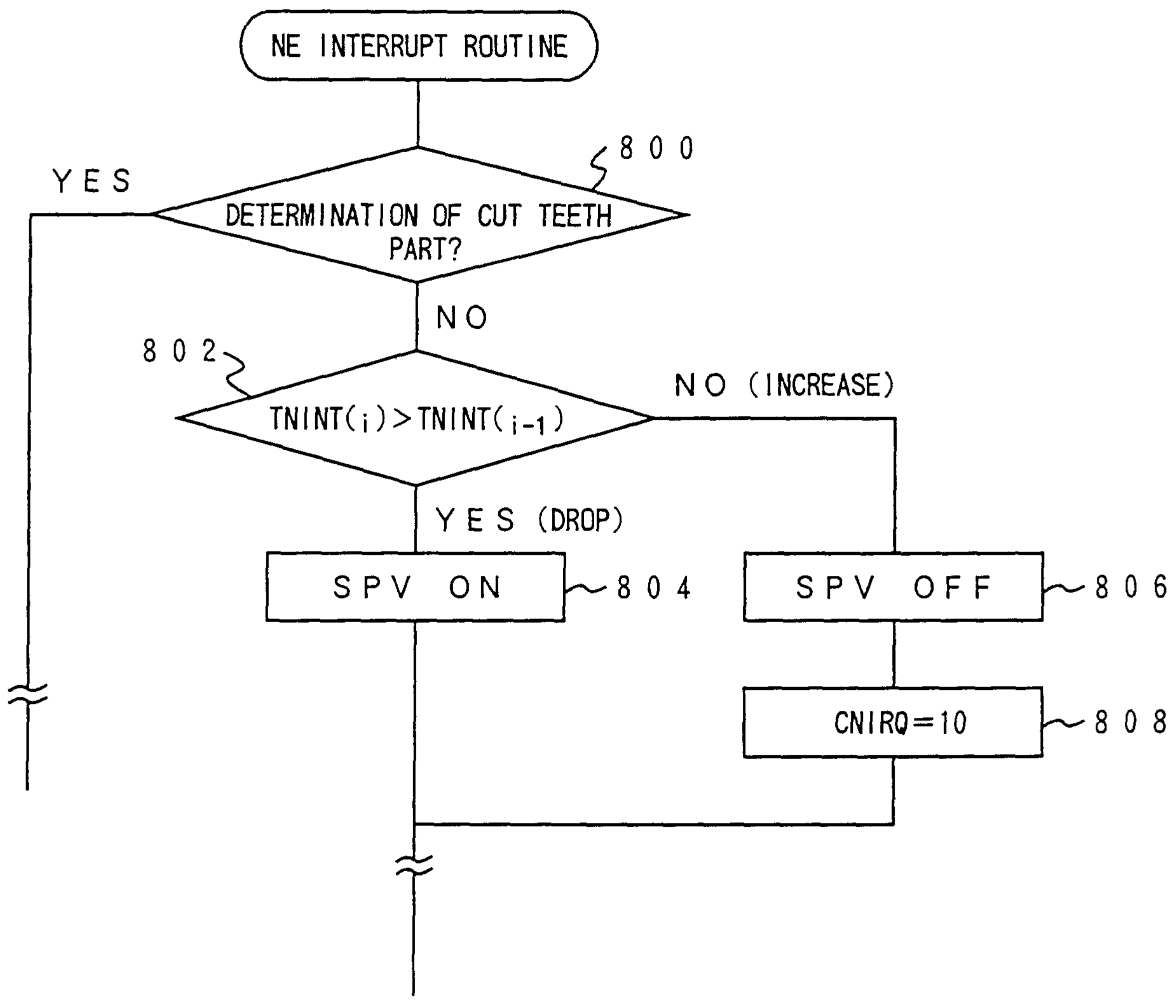
NE INTERRUPT ROUTINE
800
YES
DETERMINATION OF CUT TEETH PART?
NO
802
NO (INCREASE)
TNINT(i)>TNINT(i-1)
YES (DROP)
SPV ON
804
SPV OFF
806
CNIRQ=10
808

FIG. 23

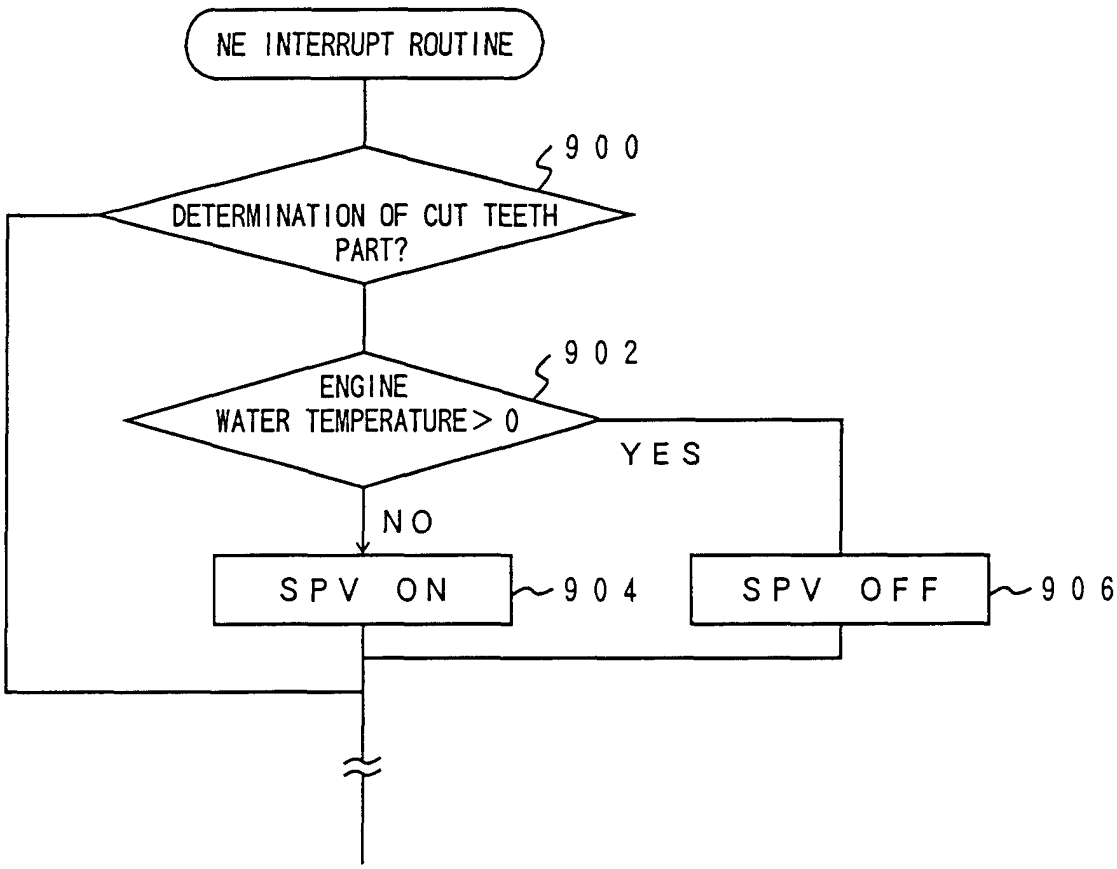
NE INTERRUPT ROUTINE
900
DETERMINATION OF CUT TEETH PART?
902
ENGINE WATER TEMPERATURE > 0
YES
NO
SPV ON
904
SPV OFF
906

FIG. 24

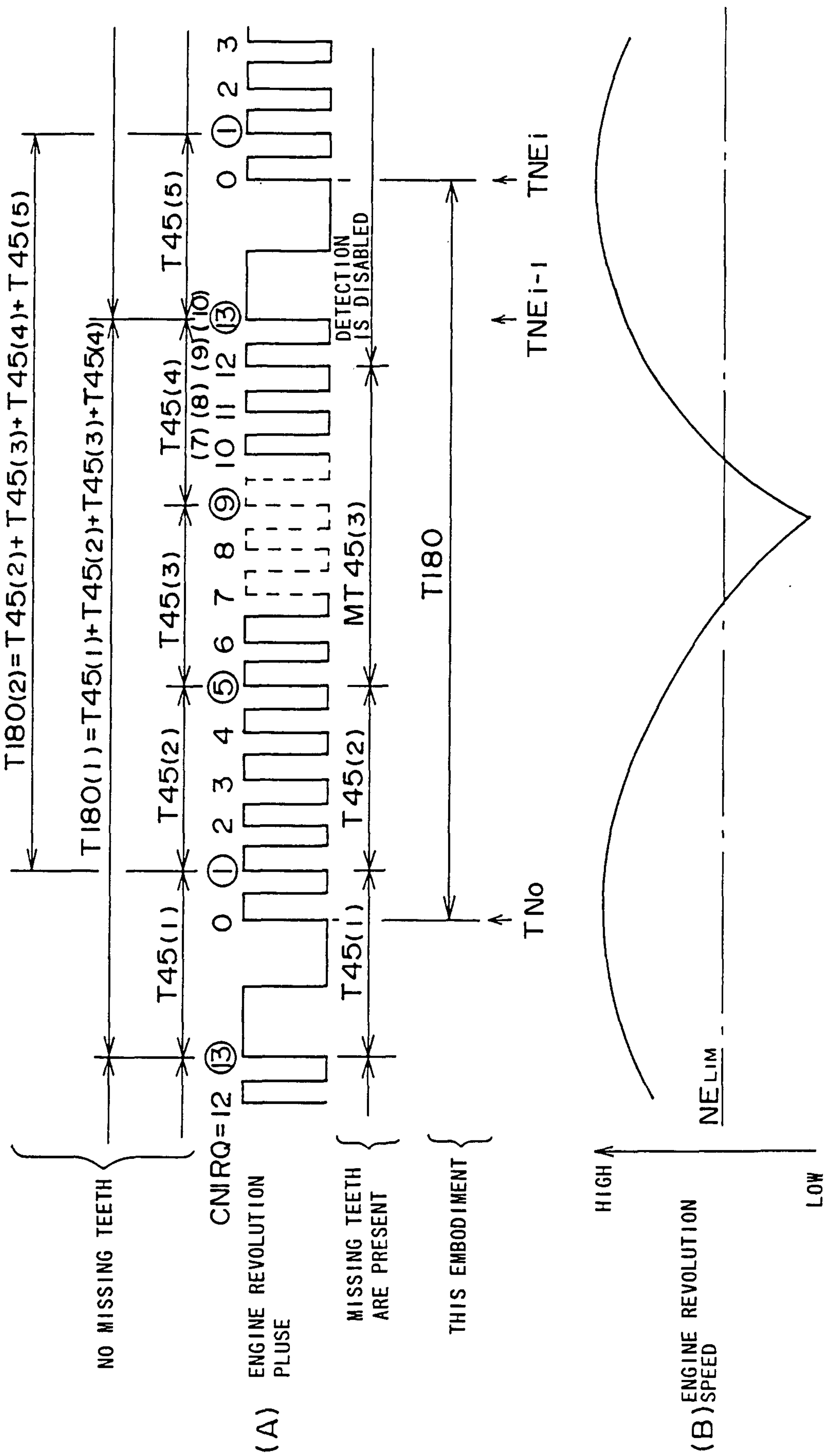
T180(2)=T45(2)+T45(3)+T45(4)+T45(5)
T180(1)=T45(1)+T45(2)+T45(3)+T45(4)
NO MISSING TEETH
T45(1)
T45(2)
T45(3)
T45(4)
T45(5)
(7) (8) (9) (10)
CNIRQ=12
13
0
1
2
3
4
5
6
7
8
9
10
11
12
(A) ENGINE REVOLUTION PLUSE
MISSING TEETH ARE PRESENT
T45(1)
T45(2)
MT45(3)
DETECTION IS DISABLED
THIS EMBODIMENT
T180
TNo
TNEi-1
TNEi
HIGH
(B) ENGINE REVOLUTION SPEED
LOW
NE LIM

FIG. 25

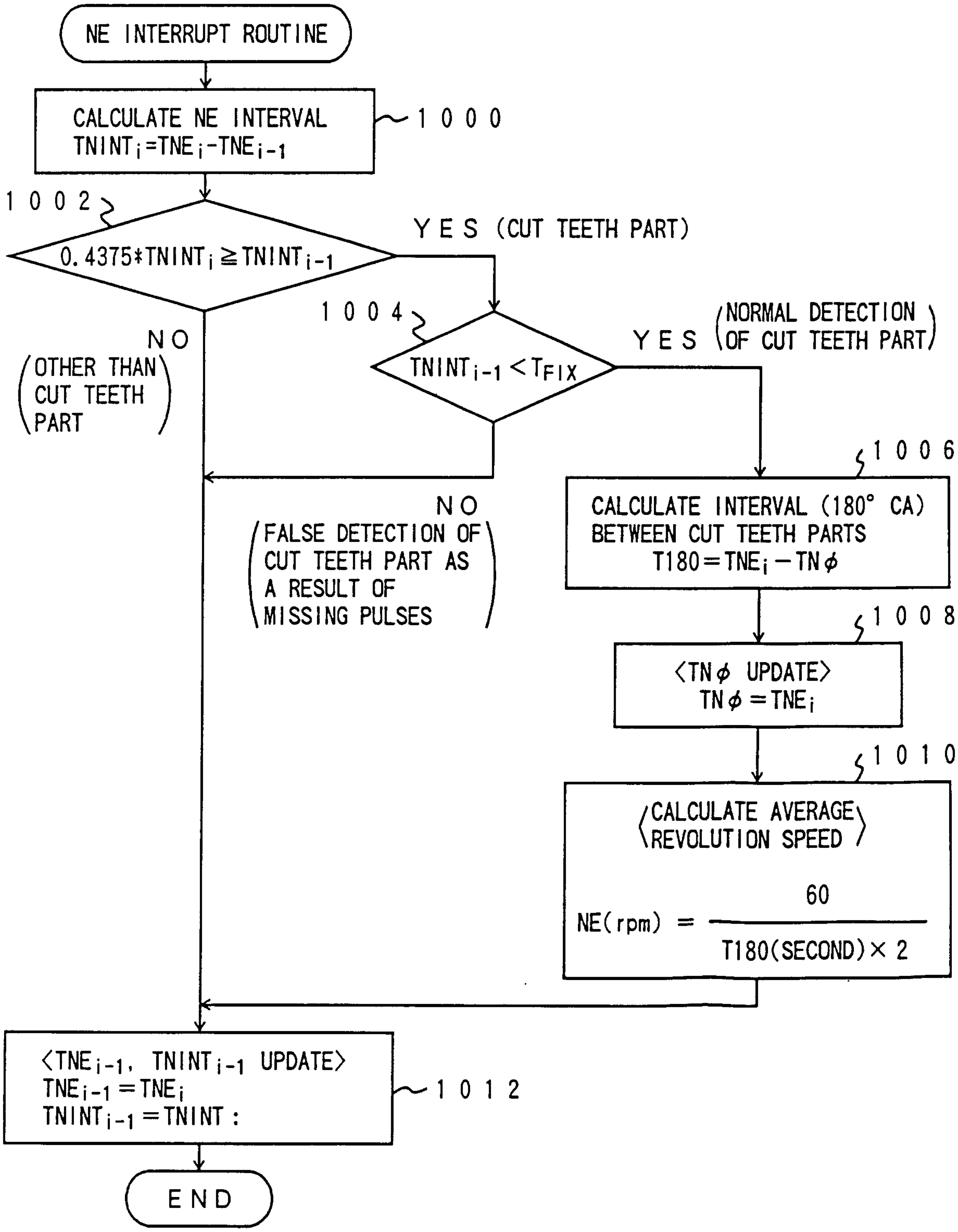
NE INTERRUPT ROUTINE
CALCULATE NE INTERVAL
TNINT$_i$=TNE$_i$-TNE$_{i-1}$
1000
1002
0.4375*TNINT$_i$ ≧ TNINT$_{i-1}$
YES (CUT TEETH PART)
NO
(OTHER THAN CUT TEETH PART)
1004
TNINT$_{i-1}$ < T$_{FIX}$
YES (NORMAL DETECTION OF CUT TEETH PART)
NO
(FALSE DETECTION OF CUT TEETH PART AS A RESULT OF MISSING PULSES)
1006
CALCULATE INTERVAL (180° CA)
BETWEEN CUT TEETH PARTS
T180=TNE$_i$−TNφ
1008
<TNφ UPDATE>
TNφ=TNE$_i$
1010
(CALCULATE AVERAGE REVOLUTION SPEED)
NE(rpm) = 60 / T180(SECOND)×2
<TNE$_{i-1}$, TNINT$_{i-1}$ UPDATE>
TNE$_{i-1}$=TNE$_i$
TNINT$_{i-1}$=TNINT:
1012
END